# EUROPÄISCHE PATENTSCHRIFT

(11) **EP 1 237 769 B1**
(45) Veröffentlichungstag und Bekanntmachung des Hinweises auf die Patenterteilung: **03.11.2004**
(21) Anmeldenummer: 00983245.2
(22) Anmeldetag: 07.12.2000
(51) Int. Cl.: B60T 13/72, B60T 13/52, B60T 7/12

(54) **UNTERDRUCKBREMSKRAFTVERSTÄRKER MIT MECHANISCHER NOTBREMSHILFE**
VACUUM-POWERED BRAKE SERVO WITH MECHANICAL EMERGENCY BRAKING ASSISTANCE
SERVO-FREIN A DEPRESSION COMPORTANT UN SYSTEME MECANIQUE D'ASSISTANCE DE FREINAGE EN CAS D'URGENCE

(30) Priorität: 15.12.1999 DE 19960576; 08.05.2000 DE 20008262 U
(43) Veröffentlichungstag der Anmeldung: 11.09.2002
(73) Patentinhaber: Lucas Varity GmbH, 56070 Koblenz (DE)
(72) Erfinder: SCHLÜTER, Peter, 56206 Kammerforst (DE); POSSMANN, Michael, 56112 Lahnstein (DE)
(74) Vertreter: Röthinger, Rainer, Dipl.-Phys.
(86) Internationale Anmeldenummer: PCT/EP2000/012348
(87) Internationale Veröffentlichungsnummer: WO 2001/044033

(56) Entgegenhaltungen:
- US-A- 5 605 088
- PATENT ABSTRACTS OF JAPAN vol. 1997, no. 11 [1997], 8. Juli 1997 (1997-07-08) & JP 09 175373 A (JIDOSHA KIKI CO LTD) in der Anmeldung erwähnt

## Beschreibung

Die Erfindung betrifft Unterdruckbremskraftverstärker mit einer Unterdruckkammer und einer davon durch eine bewegliche Wand druckdicht getrennten Arbeitskammer, einem Steuerventil, das ein mit der beweglichen Wand kraftübertragend gekoppeltes Gehäuse und einen darin angeordneten Ventilsitz aufweist, der zur Erzielung einer Druckdifferenz an der beweglichen Wand die Zufuhr von Atmosphärendruck oder Überdruck zur Arbeitskammer in Abhängigkeit von der Verschiebung eines Eingangsgliedes des Bremskraftverstärkers zu steuern vermag, sowie einer Notbremshilfe mit einem Permanentmagneten und einem mit dem Permanentmagneten zusammenwirkender Anker, der federnd entgegen der Betätigungsrichtung vorgespannt ist und bei einer Notbremsung in Anlage mit dem Permanentmagneten gezogen wird, wodurch das Steuerventil für die Zufuhr von Atmosphärendruck oder Überdruck zur Arbeitskammer geöffnet wird.

Unterdruckbremskraftverstärker sind seit langem bekannt und befinden sich millionenfach im Einsatz, um die Betätigungskräfte einer hydraulischen Fahrzeugbremsanlage zu unterstützen und dadurch auf einem für den Fahrer eines Fahrzeuges angenehm niedrigen Niveau zu halten.

Ebenfalls bekannt sind sogenannte Bremsassistenten. Unter diesem Begriff versteht man üblicherweise ein System, welches einem Fahrer im Fall einer Notbremsung bei im wesentlichen gleicher Betätigungskraft eine erhöhte Bremsleistung zur Verfügung stellen kann. Systeme dieser Art wurden entwickelt, weil Untersuchungen ergeben haben, daß die Mehrzahl der Fahrzeugbenutzer bei einer Notbremsung nicht so stark auf das Bremspedal tritt, wie es zum Erreichen der maximalen Bremsleistung erforderlich wäre. Der Anhalteweg des Fahrzeugs ist deshalb länger als notwendig.

Bereits in Produktion befindliche Systeme dieser Art verwenden einen elektromagnetisch betätigbaren Bremskraftverstärker in Verbindung mit einer Einrichtung, die die Betätigungsgeschwindigkeit des Bremspedals ermitteln kann. Stellt diese Einrichtung eine über einem vorgegebenen Schwellenwert liegende Betätigungsgeschwindigkeit fest, wird angenommen, daß eine Notbremssituation vorliegt und der Bremskraftverstärker wird mittels der elektromagnetischen Betätigungseinrichtung voll ausgesteuert, d.h. er stellt seine höchstmögliche Verstärkungsleistung bereit.

Bremskraftverstärker mit elektromagnetischer Betätigungsmöglichkeit sind für Kraftfahrzeuge der unteren und mittleren Preisklasse jedoch zu teuer. Es bestand deshalb der Wunsch nach Lösungen, die eine Bremsassistentfunktion mit geringerem Aufwand erreichen.

Ein diesbezüglich verbesserter Unterdruckbremskraftverstärker mit Bremsassistentfunktion ist aus der JP-A-9-175 373 bekannt. Der bekannte Unterdruckbremskraftverstärker besitzt eine Unterdruckkammer und eine davon durch eine bewegliche Wand druckdicht getrennte Arbeitskammer. Ein Steuerventil, welches ein mit der beweglichen Wand kraftübertragend gekoppeltes Gehäuse aufweist, hat einen starr mit dem Gehäuse verbundenen Atmosphären-Ventilsitz, der zur Erzielung einer Druckdifferenz an der beweglichen Wand die Zufuhr von Atmosphärendruck zur Arbeitskammer in Abhängigkeit der Verschiebung eines Eingangsgliedes des Bremskraftverstärkers zu steuern vermag. Zur besseren Bremskraftunterstützung bei Notbremsungen ist in dem Steuerventilgehäuse ein mit einem Permanentmagneten zusammenwirkender Anker vorhanden, der mit dem Betätigungsglied in Betätigungsrichtung starr gekoppelt ist. Der Anker ist federnd entgegen der Betätigungsrichtung vorgespannt und in der Ausgangsstellung des Steuerventils in einem ersten Abstand von dem Permanentmagneten gehalten. Im Zuge einer Annäherung an den Permanentmagneten wird der Anker bei Unterschreitung eines vorab festgelegten, zweiten Abstandes, welcher kleiner als der erste Abstand ist, von dem Permanentmagneten entgegen der auf den Anker wirkenden federnden Vorspannkraft und unter Aufhebung einer in Betätigungsrichtung starren Kopplung mit dem Betätigungsglied in Anlage an den Permanentmagneten gezogen.

Der Anker weist im wesentlichen die Form eines Hohlzylinders auf, an dessen gegenüberliegenden Enden radial nach außen abstehende Flansche angeordnet sind. Der dem Permanentmagneten zugewandte Flansch wird bei Unterschreitung des zweiten Abstandes in Anlage an den Permanentmagneten gezogen. Der vom Permanentmagneten abgewandte Flansch des Ankers weist auf seinem größten Durchmesser einen Unterdruck-Ventilsitz auf. Der Permanentmagnet ist in einer Halterung befestigt, welche entgegen der Betätigungsrichtung des Betätigungsgliedes starr mit dem Steuerventilgehäuse verbunden ist.

Bei dem aus der JP-A-9-175 373 A bekannten Unterdruckbremskraftverstärker wurde festgestellt, daß zur Erzielung einer gleichmäßigen Leistungsfähigkeit des Bremsassistenten die die Notbremshilfe konfigurierenden Bauteile nur äußerst geringe Bauteiltoleranzen aufweisen dürfen. Ansonsten ist es insbesondere nicht möglich, die Auslöseschwelle des Bremsassistenten mit der erforderlichen Konstanz zu gewährleisten. Die aus dieser Forderung resultierenden engen Bauteiltoleranzen des Bremsassistenten erschweren die Großserienfertigung und verteuern die Herstellung des Unterdruckbremskraftverstärkers.

Der Erfindung liegt die Aufgabe zugrunde, einen Unterdruckbremskraftverstärker der genannten Art mit einem mechanischen Bremsassistenten bereitzustellen, welche es bei großzügigen Bauteiltoleranzen erlaubt, eine gleichmäßige Leistungsfähigkeit des Unterdruckbremskraftverstärkers zu gewährleisten.

Diese Aufgabe ist erfindungsgemäß gelöst durch einen Unterdruckbremskraftverstärker mit den im Patentanspruch 1 angegebenen Merkmalen. Die Unteransprüche betreffen vorteilhafte Ausgestaltungen und Weiterbildungen der Erfindung.

Erfindungsgemäß wird vorgeschlagen, zur Justierung des Abstandes zwischen dem Anker und dem Permanentmagneten insbesondere im unbetätigten Zustand des Unterdruckbremskraftverstärkers die axiale Position des Permanentmagneten relativ zum Steuerventilgehäuse und/oder den Abstand zwischen dem Anker und dem Ventilsitz einstellbar auszugestalten. Dies hat den Vorteil, daß alle Bauteile des Unterdruckbremskraftverstärkers und insbesondere die Bauteile des Bremsassistenten mit großzügigen Bauteiltoleranzen hergestellt werden können. Die gezielte Einstellung des Abstandes zwischen Anker und Permanentmagnet erfolgt erfindungsgemäß erst beim oder nach dem Zusammenbau des Unterdruckbremskraftverstärkers.

Die Justierung des Abstandes zwischen dem Anker und dem Permanentmagneten kann auf unterschiedliche Weise realisiert werden. Sind beispielsweise Anker und Ventilsitz einstückig ausgestaltet, kann die axiale Position des Permanentmagneten relativ zum Gehäuse eingestellt werden. Ist andererseits die axiale Position des Permanentmagneten relativ zum Gehäuse fest vorgegeben, so können Anker und Ventilsitz in Form getrennter Bauteile vorgesehen werden, welche in vorgegebenem maximalem Abstand voneinander miteinander verbunden sind. Selbstverständlich können diese Möglichkeiten zur Justierung des Abstandes zwischen dem Anker und dem Permanentmagneten auch kombiniert werden.

Liegen Anker und Ventilsitz in Form von getrennten Bauteilen vor, so ist ein definierter Abstand zwischen diesen beiden Bauteilen auf verschiedene Weise realisierbar. Beispielsweise kann zwischen Anker und Ventilsitz ein Abstandselement angeordnet werden. Es kann dann ein Satz Abstandselemente mit unterschiedlichen, vorgegebenen Längen bereitgestellt werden und in Abhängigkeit von dem gewünschten Abstand zwischen Anker und Ventilsitz wird bei der Montage des Unterdruckbremskraftverstärkers das entsprechende Abstandselement ausgewählt und zwischen Anker und Ventilsitz angeordnet. Eine alternative Ausführungsform sieht vor, deformierbare Standardabstandselemente vorzusehen, welche entsprechend dem gewünschten Abstand zwischen Anker und Ventilsitz vor der Montage des Unterdruckbremskraftverstärkers auf die benötigte Dimension umgeformt werden. Das umgeformte Abstandselement wird dann zwischen dem Anker und dem Ventilsitz angeordnet.

Ein vorgegebener Abstand zwischen Anker und Ventilsitz kann auch dadurch realisiert werden, daß Anker und Ventilsitz zueinander komplementäre Gewinde aufweisen. Bei der Montage des Unterdruckbremskraftverstärkers wird dann zwischen dem Anker und dem Ventilsitz eine Schraubverbindung hergestellt, wobei über die Länge der Schraubverbindung der Abstand zwischen Anker und Ventilsitz einstellbar ist.

Eine weitere Möglichkeit zur Verbindung von Anker und Ventilsitz besteht darin, einen Preßsitz, d.h. eine kraftschlüssige Verbindung zwischen Anker und Ventilsitz vorzusehen. Der Abstand zwischen Anker und Ventilsitz wird dann durch die Länge der Preßsitzverbindung definiert.

Anker oder Ventilsitz oder beide Bauteile können auch einen sich in axialer Richtung erstreckenden, deformierbaren Fortsatz aufweisen. Der oder die Fortsätze sind bevorzugt zwischen dem Anker und dem Ventilsitz angeordnet und bestimmen daher den Abstand zwischen Anker und Ventilsitz. Die Deformation eines Fortsatzes kann durch Kraftbeaufschlagung vor oder während des Zusammenbaus von Anker und Ventilsitz stattfinden.

Selbstverständlich sind die oben geschilderten Möglichkeiten zur Einstellung des Abstandes zwischen Anker und Ventilsitz beliebig kombinierbar. So kann beispielsweise durch zwischen Anker und Ventilsitz eingefügte Abstandselemente die Länge der Schraubverbindung oder der Preßsitzverbindung vorgegeben werden.

Auch zur Einstellung der axialen Position des Permanentmagneten relativ zum Steuerventilgehäuse stehen verschiedene Möglichkeiten zur Verfügung. So ist die axiale Position durch ein Abstandselement einstellbar, welches zwischen einer einem Eingangsglied des Bremskraftverstärkers zugewandten Stirnfläche des Permanentmagneten oder einer Halterung für den Permanentmagneten einerseits und einer der Arbeitskammer zugewandten Stirnfläche des Steuerventilgehäuse andererseits angeordnet ist. Die axiale Position des Permanentmagneten relativ zum Gehäuse kann dann beispielsweise durch die Länge des Abstandselementes eingestellt werden. Wie oben bereits geschildert, kann ein Satz von Abstandselementen definierter Länge bereitgestellt sein oder das Abstandselement kann deformierbar ausgebildet sein.

Das Abstandselement ist bevorzugt kreisringförmig ausgestaltet und kann den Permanentmagneten oder eine Halterung für den Permanentmagneten konzentrisch umgeben. In diesem Fall ist die axiale Position des Permanentmagneten relativ zum Steuerventilgehäuse auch dadurch einstellbar, daß das Abstandselement einerseits und der Permanentmagnet oder die Halterung des Permanentmagneten andererseits über einen Preßsitz relativ zueinander fixiert sind und die Länge der Preßsitzverbindung gezielt eingestellt ist.

Bei den soeben beschriebenen Möglichkeiten zur Einstellung der axialen Position des Permanentmagneten relativ zum Steuerventilgehäuse ist der Permanentmagnet oder die Halterung für den Permanentmagneten bevorzugt über ein elastisches Element, beispielsweise eine Feder, in Richtung auf den Anker vorgespannt.

Eine weitere Ausführungsform zur Einstellung der axialen Position des Permanentmagneten relativ zum Steuerventilgehäuse sieht vor, mit dem Permanentmagneten oder einer Halterung für den Permanentmagneten einen Fortsatz zu verbinden, welcher sich von dem Permanentmagneten oder der Halterung in Richtung auf die Arbeitskammer erstreckt. Über diesen Fortsatz kann der Permanentmagnet oder dessen Halterung entgegen der Betätigungsrichtung eines Eingangsgliedes des Unterdruckbremskraftverstärkers starr mit dem Gehäuse gekoppelt sein. Der Fortsatz kann einen oder mehrere Arme umfassen, welche sich zur Verhinderung einer Drehbewegung des Permanentmagneten durch entsprechende Öffnungen des Steuerventilgehäuses oder eines entgegen der Betätigungsrichtung starr mit dem Steuerventilgehäuse verbundenen Gehäuseeinsatzes erstrecken.

Über den oder die Fortsätze des Permanentmagneten oder dessen Halterung kann auf unterschiedliche Art und Weise die axiale Position des Permanentmagneten relativ zum Steuerventilgehäuse eingestellt werden. So kann beispielsweise ein Fortsatz an einem der Arbeitskammer zugewandten Ende einen sich radial nach außen erstreckenden Flansch aufweisen, welcher ein Abstandselement hintergreift. Das Abstandselement wiederum ist entgegen der Betätigungsrichtung des Eingangsgliedes starr mit dem Steuerventilgehäuse verbunden. Durch die Wahl eines Abstandselementes geeigneter Länge oder die Umformung eines Standardabstandselementes kann dann die axiale Position des Magneten relativ zum Steuerventilgehäuse vorgegeben werden.

Gemäß einer bevorzugten Ausführungsform weist der mindestens eine Fortsatz an einem der Arbeitskammer zugewandten Ende ein Gewinde auf, welches mit einem entgegen der Betätigungsrichtung des Eingangsgliedes starr mit dem Steuerventilgehäuse verbundenen, komplementären Gewinde beispielsweise eines Einstellringes zusammenwirkt. Um zu verhindern, daß sich eine Drehung des Einstellringes auf den Permanentmagneten bzw. dessen Halterung überträgt, weist der Fortsatz einen oder mehrere Arme auf, welche sich durch bezüglich einer Drehbewegung ortsfeste Öffnungen des Steuerventilgehäuses oder eines Steuerventilgehäuse-Einsatzes erstrecken. Der Einstellring wirkt dann mit den sich durch diese Öffnungen erstreckenden Bereiche der Arme des Fortsatzes zusammen. Eine derartige Ausgestaltung des Unterdruckbremskraftverstärkers erlaubt die Einstellung des Abstandes zwischen Anker und Permanentmagnet auch noch nach der Montage des Bremskraftverstärkers, z.B. in vorgegebenen Serviceintervallen.

Zusätzlich kann im Bereich zwischen dem mit dem Flansch des Fortsatzes zusammenwirkenden Abstandselement oder dem Einstellring einerseits und dem Permanentmagneten oder dessen Halterung andererseits ein unter Vorspannung stehendes elastisches Element angeordnet sein, welches das Abstandselement und den Einstellring einerseits und den Permanentmagneten oder dessen Halterung andererseits in entgegengesetzte Richtungen drückt.

Der Unterdruckbremskraftverstärker kann ein Kraftabgabeelement beispielsweise in Gestalt eines Reaktionskolbens des Hauptzylinders einer hydraulischen Fahrzeugbremsanlage umfassen, welches relativ zum Steuerventilgehäuse drehbar ist und bezüglich einer Drehbewegung starr mit dem Einstellring gekoppelt ist. Eine Drehbewegung des Kraftabgabeelementes überträgt sich daher auf den Einstellring, so daß dieser bequem von außen auch noch nach Montage des Bremskraftverstärkers betätigt werden kann.

Vorzugsweise weisen sowohl das Kraftabgabeelement als auch der Einstellring jeweils mindestens eine, sich in axialer Richtung erstreckende Öffnung auf, wobei sich durch fluchtende Öffnungen von Einstellring und Kraftabgabeelement jeweils ein Kraftübertragungselement erstreckt. Das Kraftübertragungselement, welches beispielsweise als ein Stift ausgestaltet sein kann, ermöglicht die Übertragung eines Drehmoments vom Kraftabgabeelementes auf den Einstellring. Um die Einleitung eines Drehmomentes in das Kraftabgeelement zu erleichtern, kann dieses noch mit einer Struktur in Gestalt von beispielsweise Erhebungen oder Vertiefungen versehen sein, welche das Angreifen eines Werkzeuges ermöglichen.

Gemäß einer weiteren Ausführungsform ist das Steuerventilgehäuse an seinem der Arbeitskammer zugewandten Ende durch einen drehbar innerhalb des Steuerventilgehäuse angeordneten Einsatz verschlossen. Dieser Einsatz ist über ein Gewinde mit dem Permanentmagneten gekoppelt, welcher wiederum bezüglich einer Drehbewegung um eine Längsachse des Steuerventilgehäuses starr mit dem Steuerventilgehäuse verbunden ist. Aufgrund dieser starren Kopplung des Permanentmagneten mit dem Steuerventilgehäuse bezüglich einer Drehbewegung kann sich der Permanentmagnet bei Drehung des Steuerventilgehäuse-Einsatzes relativ zum Steuerventilgehäuse nicht mitdrehen. Aufgrund der Kopplung von Steuerventilgehäuse-Einsatz und Permanentmagnet über ein Gewinde bewirkt eine Drehung des Steuerventilgehäuse-Einsatzes vielmehr eine axiale Verschiebung des Permanentmagneten relativ zum Steuerventilgehäuse. Da eine Drehung des Steuerventilgehäuse-Einsatzes auch nach Montage des Bremskraftverstärkers noch möglich ist, gestattet diese Ausführungsform eine nachträgliche Justierung des Abstandes zwischen Permanentmagnet und Anker z.B. im Rahmen einer Serviceinspektion.

Um die Einleitung eines Drehmomentes in den Steuerventilgehäuse-Einsatz zu erleichtern, kann dieser mit einer entsprechenden Struktur versehen sein. Diese Struktur kann beispielsweise Erhebungen oder Vertiefungen umfassen, welche den Angriff eines Werkzeuges ermöglichen.

Der Ventilsitz, welcher die Zufuhr von zumindest Atmosphärendruck zur Arbeitskammer zu steuern vermag, ist bevorzugt zumindest in Betätigungsrichtung sowohl mit dem Eingangsglied des Bremskraftverstärkers als auch mit dem Anker gekoppelt. Eine derartige Ausgestaltung des Ventilsitzes erlaubt eine unkomplizierte Zufuhr von zumindest Atmosphärendruck zur Arbeitskammer in Abhängigkeit der Verschiebung des Eingangsgliedes.

Weitere Vorteile und Ausgestaltungen der Erfindung ergeben sich aus den nachfolgend geschilderten Ausführungsbeispielen sowie den Figuren. Es zeigen:
- Fig. 1: einen Längsschnitt durch den interessierenden Bereich eines ersten Ausführungsbeispiels eines erfindungsgemäßen Unterdruckbremskraftverstärkers in einer Ruhestellung,
- Fig. 2: ein zweites Ausführungsbeispiel eines erfindungsgemäßen Unterdruckbremskraftverstärkers in einer Ansicht ähnlich Fig. 1 und in Ruhestellung,
- Fig. 3: ein drittes Ausführungsbeispiel eines erfindungsgemäßen Unterdruckbremskraftverstärkers in einer Ansicht ähnlich Fig. 1 und in Ruhestellung,
- Fig. 4: ein viertes Ausführungsbeispiel eines erfindungsgemäßen Unterdruckbremskraftverstärkers in einer Ansicht ähnlich Fig. 1 und in Ruhestellung,
- Fig. 5: ein fünftes Ausführungsbeispiel eines erfindungsgemäßen Unterdruckbremskraftverstärkers in einer Ansicht ähnlich Fig. 1 und in Ruhestellung,
- Fig. 6: ein sechstes Ausführungsbeispiel eines erfindungsgemäßen Unterdruckbremskraftverstärkers in einer Ansicht ähnlich Fig. 1 und in Ruhestellung,
- Fig. 7: ein siebtes, dem in Fig. 6 dargestellten Ausführungsbeispiel ähnliches Ausführungsbeispiel eines erfindungsgemäßen Unterdruckbremskraftverstärkers in einer Ansicht ähnlich Fig. 1 und in Ruhestellung,
- Fig. 8: ein achtes, dem in Fig. 7 dargestellten Ausführungsbeispiel ähnliches Ausführungsbeispiel eines erfindungsgemäßen Unterdruckbremskraftverstärkers in einer Ansicht ähnlich Fig. 1 und in Ruhestellung,
- Fig. 9: ein neuntes Ausführungsbeispiel eines erfindungsgemäßen Unterdruckbremskraftverstärkers in einer Ansicht ähnlich Fig. 1 und in Ruhestellung, und
- Fig. 10: ein zehntes Ausführungsbeispiel eines erfindungsgemäßen Unterdruckbremskraftverstärkers in einer Ansicht ähnlich Fig. 1 und in Ruhestellung.

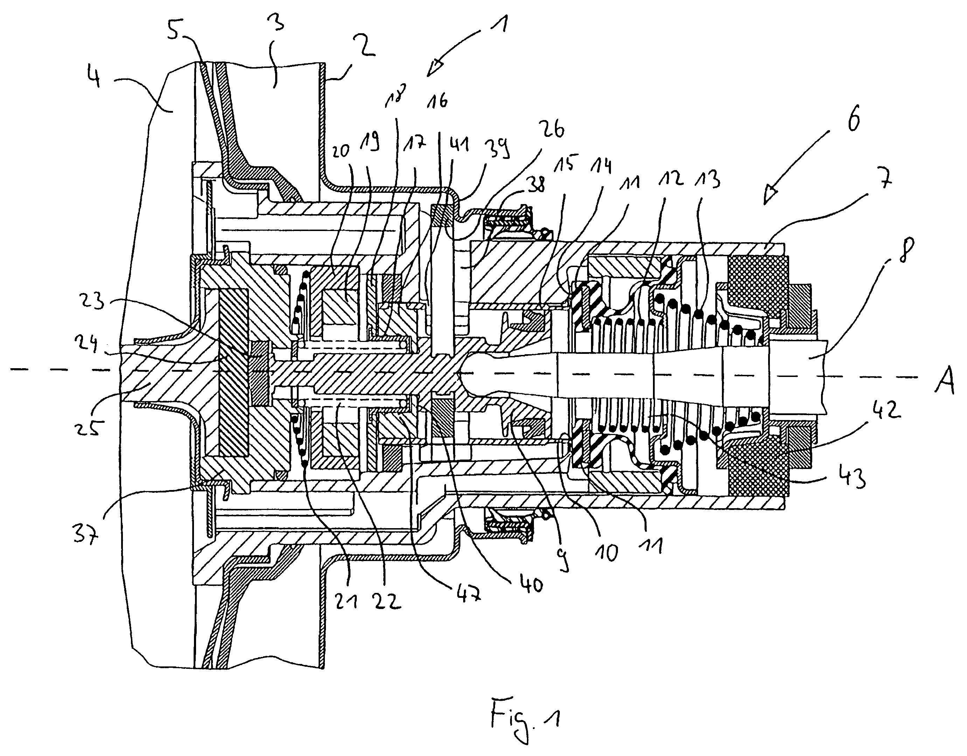

In Fig. 1 ist ein Unterdruckbremskraftverstärker 1 mit einem Gehäuse 2 gezeigt, in dem eine bewegliche Wand 5 eine Unterdruckkammer 4 von einer Arbeitskammer 3 trennt.

Die Unterdruckkammer 4 steht im Betrieb des Bremskraftverstärkers 1 ständig mit einer Unterdruckquelle in Verbindung, beispielsweise mit dem Ansaugtrakt eines Verbrennungsmotors oder mit einer Unterdruckpumpe. Ein Steuerventil 6 mit einem Gehäuse 7 ist dazu vorgesehen, wahlweise eine Verbindung der Arbeitskammer 3 mit der Unterdruckkammer 4 herzustellen, damit auch die Arbeitskammer 3 evakuiert wird, oder um eine Verbindung zwischen der evakuierten Arbeitskammer 3 und der Umgebungsatmosphäre, d.h. dem Umgebungsdruck herzustellen. Die bewegliche Wand 5 ist kraftübertragend mit dem Steuerventilgehäuse 7 gekoppelt. Abweichend von der dargestellten Bauweise des Bremskraftverstärkers kann dieser auch zwei Unterdruckkammern und zwei Arbeitskammern (Tandembauweise) aufweisen.

Der Bremskraftverstärker 1 wird mittels eines stangenförmigen, von einer Feder 13 federnd in seine Ausgangsstellung vorgespannten Eingangsgliedes 8 betätigt, das längs einer Achse A in das Steuerventilgehäuse 7 ragt und mit seinem einen, kugelig ausgeführten Ende in einem Übertragungskolben 9 befestigt ist.

Mit dem Übertragungskolben 9 starr verbunden ist ein Riegel 26, der sich rechtwinklig zur Achse A von dem Übertragungskolben 9 weg und durch einen im Steuerventilgehäuse 7 ausgebildeten Kanal 38 erstreckt. In der in Fig. 1 gezeigten Position liegt der Riegel 26 an einem Anschlag 39 des Bremskraftverstärkergehäuses 2 an, der die Ruhestellung des Steuerventils 6 definiert, d.h. die Stellung aller Bauteile des Steuerventils 6 zueinander, die diese bei unbetätigtem Bremskraftverstärker 1 einnehmen. Die Seitenwände des Kanals 38 begrenzen die Bewegungsmöglichkeit des Riegels 26 längs der Achse A, d.h. der maximale Hub des Riegels 26 längs der Achse A ist durch den Abstand gegeben, den die Seitenwände des Kanals 38 voneinander haben.

Das dem kugelig ausgeführten Ende des Eingangsgliedes 8 gegenüberliegende Ende des Übertragungskolbens 9 weist eine Fühlscheibe 23 auf, die eine über das Eingangsglied 8 in den Bremskraftverstärker 1 eingeleitete Betätigungskraft über eine Reaktionsscheibe 24 auf einen als Kraftabgabeglied fungierenden Reaktionskolben 25 eines dem Bremskraftverstärker 1 nachgeschalteten, hier nicht gezeigten Hauptzylinders einer hydraulischen Fahrzeugbremsanlage überträgt.

Der Übertragungskolben 9 durchsetzt einen konzentrisch zu ihm angeordneten, kreisringförmigen Anker 13 und einen ebenfalls konzentrisch zum Übertragungskolben 9 angeordneten, ringförmigen Permanentmagneten 19, der in einer Halterung 20 aufgenommen ist. Wie in Figur 1 angedeutet, sind am Außendurchmesser der Halterung 20 für den Permanentmagneten 19 Rippen angeordnet, welche sich entlang der Achse A erstrecken. Die Halterung 20 befindet sich zumindest über diese Rippen in Kontakt mit einer der Arbeitskammer 3 zugewandten Stirnfläche des Steuerventilgehäuses 7.

Zwischen einer der Arbeitskammer 3 zugewandten Seite der Halterung 20 für den Permanentmagneten 19 und einem Steuerventilgehäuse-Einsatz 37, welcher ein der Vakuumkammer 4 zugewandtes Ende des Steuerventilgehäuses 7 abschließt, ist eine unter Vorspannung stehende Feder 21 angeordnet. Die sich an dem Einsatz 37 abstützende Feder 21 drückt die Halterung 20 entgegen der Betätigungsrichtung des Eingangsgliedes 8 gegen einen Anschlag des Steuerventilgehäuses 7.

Der in Figur 1 dargestellte Unterdruckbremskraftverstärker 1 enthält eine Ankerbaugruppe, welche sich aus einem hülsenförmigen Fortsatz 15, einem Befestigungsring 16, einer Einstellhülse 17 sowie einem kreisringförmigen Anker 18 zusammensetzt und einen Ventilsitz 10 aufweist.

Der hülsenförmige Fortsatz 15 ist als Hohlzylinder ausgestaltet und ist an seinem der Arbeitskammer 3 zugewandten Hülsenende mit dem Ankerring 18 gekoppelt. Das entgegengesetzte Hülsenende bildet den mit dem Ventildichtglied 11 zusammenwirkenden Ventilsitz 10.

An dem der Arbeitskammer 3 zugewandten Ende des hülsenförmigen Fortsatzes 15 ist ein Befestigungsring 16 derart mit dem Fortsatz 15 verbunden, daß er eine Krafteinleitung in den Fortsatz 15 gestattet. Im Innendurchmesser dieses Befestigungsringes 16 ist eine im Querschnitt Z-förmige Einstellhülse 17 aufgenommen.

Die Einstellhülse 17 weist einen radial nach innen weisenden Kragen, welcher mit einer Rückstellfeder 22 zusammenwirkt, sowie einen radial nach außen gerichteten Kragen zur Anbindung des Ankerringes 18 auf. Die unter Vorspannung stehende Rückstellfeder 22 wirkt mit dem fest mit dem Steuerventilgehäuse 7 verbundenen Steuerventilgehäuse-Einsatz 37 zusammen und spannt die gesamte Ankerbaugruppe entgegen der Betätigungsrichtung des Eingangsgliedes 8 vor.

Der Befestigungsring 16 ist vorzugsweise aus Kunststoff gefertigt. Die Verbindung zwischen Befestigungsring 16 und hülsenförmigem Fortsatz 15 kann dann auf einfache Weise durch Kunststoffspritzgießverfahren realisiert werden.

Für den Kraftschluß der Einstellhülse 17 zum Befestigungsring 16 stehen unterschiedliche Realisierungsmöglichkeiten zur Verfügung. Denkbar ist beispielsweise, daß der Mantel der Einstellhülse 17 mehrere, am Mantelumfang verteilte, gewindeartig angeordnete Fortsätze 47 aufweist, welche sich in den Kunststoff des Befestigungsringes 16 durch Drehung hineinschneiden. Über dieses Hineinschneiden der Einstellhülse in den Befestigungsring 16 läßt sich dann der axiale Überstand des sich radial nach außen erstreckenden Kragens der Einstellhülse 17 bezüglich des hülsenförmigen Fortsatzes 15 justieren. Die Schraubverbindung 47 zwischen der Einstellhülse 17 und dem Befestigungsring 16 gewährleistet somit die Einstellbarkeit des Abstandes zwischen dem Anker 18 und dem Ventilsitz 10. Eine alternative Verbindung zwischen Einstellhülse 17 und Befestigungsring 16 sieht vor, einen Preßsitz zwischen der Einstellhülse 17 und dem Befestigungsring 16 vorzusehen. Der axiale Abstand zwischen dem Anker 18 und dem Ventilsitz 10 ist dann über die Länge der Preßsitzverbindung einstellbar.

Der sich radial nach außen erstreckende Kragen der Einstellhülse 17 hintergreift den Ankerring 18 derart, daß die axiale Bewegung des Ankerringes 18 einerseits durch diesen Kragen der Einstellhülse 17 und andererseits durch den Befestigungsring 16 bzw. den hülsenförmigen Fortsatz 15 begrenzt wird. Da bereits in unbetätigtem Zustand des Unterdruckbremskraftverstärkers 1 auf den Ankerring 18 die Magnetkräfte des Permanentmagneten 19 einwirken, legt sich der Ankerring 18 automatisch an den sich radial nach außen erstreckenden Kragen der Einstellhülse 17. Das rückseitig vorhandene Spiel zur Stirnfläche des hülsenförmigen Fortsatzes 15 bzw. des Befestigungsringes 16 beeinflußt das Zusammenwirken von Ankerring 18 und Permanentmagnet 19 nicht. Trotz des Spieles ist daher eine Kopplung des Ankerringes 18 mit dem Eingangsglied 8 in Betätigungsrichtung des Eingangsgliedes gegeben. Weiterhin ist trotz des Spieles der Ankerring 18 durch die Rückstellfeder 22 entgegen der Betätigungsrichtung vorgespannt.

Der mit dem Permanentmagneten 19 zusammenwirkende Anker 18 ist längs der Achse A verschiebbar. Die radial zwischen dem Permanentmagneten 19 bzw. dem Anker 18 und dem Übertragungskolben 9 angeordnete Druckfeder 22, deren eines Ende sich am Einsatz 37 und deren anderes Ende sich an der Einstellhülse 17 abstützt, spannt den Anker 18 federnd entgegen der Betätigungsrichtung und gegen einen am Übertragungskolben 9 ausgebildeten Ringbund 40 vor. Die Druckfeder 22 sorgt also dafür, daß zwischen dem Anker 18 und dem Permanentmagneten 19 in der Ruhestellung des Steuerventils 6 ein axialer Luftspalt existiert, d.h. daß der Anker 18 in einem ersten Abstand von dem Permanentmagneten 19 gehalten wird.

Am freien Ende des hülsenförmigen Fortsatzes 15 ist ein erster ringförmiger Ventilsitz 10 des Steuerventils 6 ausgebildet. Der erste Ventilsitz 10 wirkt mit einem über eine Feder 12 gegen ihn vorgespannten, ebenfalls ringförmigen Ventildichtglied 11 zusammen und kann die Verbindung zwischen der Umgebungsatmosphäre und der Arbeitskammer 3 des Bremskraftverstärkers 1 steuern.

Radial außerhalb des ersten Ventilsitzes 10 und konzentrisch zu diesem ist innen am Steuerventilgehäuse 7 ein zweiter ringförmiger Ventilsitz 14 des Steuerventils 6 ausgebildet, der ebenfalls mit dem Ventildichtglied 11 zusammenwirkt und der die Verbindung zwischen der Unterdruckkammer 4 und der Arbeitskammer 3 des Bremskraftverstärkers 1 steuern kann.

Wie dargestellt, ragt der Riegel 26 durch eine Ausnehmung 41 des hülsenförmigen Fortsatzes 15. In dieser Ausnehmung hat der Riegel 26 in Richtung der Achse A ein Spiel, das kleiner als der maximal mögliche Hub des Riegels 26 in dem Kanal 38 ist.

Eine Betätigung des Bremskraftverstärkers 1 verschiebt das Eingangsglied 8 in den Bremskraftverstärker 1 bzw. das Steuerventil 6 hinein, d.h. in der Figur nach links. Diese Verschiebung des Eingangsgliedes 8 wird auf den Übertragungskolben 9 übertragen. Der Übertragungskolben 9 nimmt dabei über seinen Ringbund 40 auch die Ankerbaugruppe 15, 16, 17, 18 in Betätigungsrichtung mit.

Die Verschiebung der Ankerbaugruppe 15, 16, 17, 18 bewirkt, daß der am hohlzylindrischen Fortsatz 15 ausgebildete, erste Ventilsitz 10 von dem Ventildichtglied 11 abgehoben wird, wodurch Umgebungsluft durch ein Filterelement 42 und einen das Eingangsglied 8 umgebenden Kanal 43 und vorbei am geöffneten Ventilsitz 10 durch den im Steuerventilgehäuse 7 ausgebildeten Kanal 38 in die Arbeitskammer 3 gelangen kann. An der beweglichen Wand 5 entsteht daraufhin eine Druckdifferenz und die daraus resultierende Kraft wird von der beweglichen Wand 5 auf das Steuerventilgehäuse 7 übertragen, welches diese Kraft an den bereits erwähnten, hier nicht dargestellten Hauptzylinder abgibt.

Der erste Ventilsitz 10 des Steuerventils 6 wird also in Abhängigkeit der Verschiebung des Eingangsgliedes 8 relativ zum Steuerventilgehäuse 7 mehr oder weniger weit geöffnet, wodurch sich eine entsprechend ansteigende Unterstützungskraft des Bremskraftverstärkers 1 ergibt, die aus der jeweils an der beweglichen Wand 5 wirkenden Druckdifferenz resultiert.

Bei üblichen Betriebsbremsungen, die hier als Normalbremsungen bezeichnet werden, wird das Eingangsglied 8 und damit auch der Anker 18 nur relativ wenig in Betätigungsrichtung verschoben. Die Druckfeder 22 ist so ausgelegt, daß die von ihr auf den Anker 18 ausgeübte Rückstellkraft während solcher Normalbremsungen größer als die Kraft des Permanentmagneten 19 ist, die den Anker 18 in Betätigungsrichtung, d.h. in den Figuren nach links zu ziehen versucht. Auf diese Weise ist der erste Ventilsitz 10 während einer Normalbremsung mit dem Eingangsglied 8 nicht nur in Betätigungsrichtung (über den Übertragungskolben 9, den Ringbund 40 des Übertragungskolbens 9 sowie die Ankerbaugruppe 15, 16, 17, 18), sondern auch entgegen der Betätigungsrichtung starr gekoppelt (über die von der Druckfeder 22 gegen den Ringbund 40 gedrückte Ankerbaugruppe 15, 16, 17, 18 sowie den Übertragungskolben 9). Jede Verschiebung des Eingangsgliedes 8 wird demnach verzögerungsfrei auf den ersten Ventilsitz 10 übertragen.

Wird eine im Rahmen einer Normalbremsung zunächst auf das Eingangsglied 8 aufgebrachte Betätigungskraft nicht erhöht, kommt das Ventildichtglied 11 im Zuge der Verschiebung des Steuerventilgehäuses 7 wieder mit dem ersten Ventilsitz 10 in Berührung, so daß die Luftzufuhr in die Arbeitskammern 3 unterbrochen wird (Gleichgewichtsstellung, oeide Ventilsitze 10 und 14 geschlossen).

Bei einer schnell und mit relativ großem Hub erfolgenden Betätigung des Eingangsgliedes 8, wie sie typisch für eine Panikbremsung (Notbremsung) ist, nähert sich jedoch der Anker 18 dem Permanentmagneten 19 stärker an, so daß ab Unterschreitung eines zweiten Abstandes zwischen dem Anker 18 und dem Permanentmagneten 19, der kleiner als der zuvor genannte erste Abstand ist, die Kraft der Druckfeder 22 nicht mehr dazu ausreicht, den Anker 18 vom Permanentmagneten 19 fernzuhalten. Statt dessen überwiegt dann die vom Permanentmagneten 19 auf den Anker 18 ausgeübte Kraft und letzterer gerät in Anlage mit dem Permanentmagneten 19. Damit ist der maximal mögliche Öffnungsquerschnitt des ersten Ventilsitzes 10 erreicht und es strömt Umgebungsluft in die Arbeitskammer 3 ein, bis der maximal mögliche Differenzdruck und damit die maximal mögliche Verstärkungskraft des Bremskraftverstärkers 1 erreicht ist (sog. Aussteuerpunkt des Bremskraftverstärkers).

Da der Anker 18 sich durch das Inanlagekommen mit dem Permanentmagneten 19 von dem Ringbund 40 des Übertragungskolbens 9 gelöst hat, ist der erste Ventilsitz 10 vom Eingangsglied 8 entkoppelt und bleibt deshalb selbst dann geöffnet, wenn ein den Bremskraftverstärker 1 bedienender Fahrer im weiteren Verlauf der Notbremsung die notwendige Eingangskraft nicht mehr vollständig aufbringen kann. Mit anderen Worten, selbst wenn das Eingangsglied 8 sich im weiteren Verlauf der Notbremsung aufgrund der sich dann einstellenden, hohen Rückwirkkräfte etwas entgegen der Betätigungsrichtung verschiebt, führt dies nicht zum Schließen des ersten Ventilsitzes 10, da diese Rückstellbewegung des Eingangsgliedes 8 nicht auf den ersten Ventilsitz 10 übertragen wird.

Erst wenn der Rückhub des Eingangsgliedes 8 so groß ist, daß der Riegel 26 in Kontakt mit dem in der Figur rechten Rand der Ausnehmung 41 des hülsenförmigen Fortsatzes 15 gerät, wird auf den Anker 18 die auf das Eingangsglied 8 wirkende Rückstellkraft übertragen, die dazu ausreicht, den Anker 18 vom Permanentmagneten 19 wieder zu lösen. Der erste Ventilsitz 10 kommt daraufhin mit dem Ventildichtglied 11 in Berührung und verschiebt dieses entgegen der Betätigungsrichtung, wodurch der zweite Ventilsitz 14 geöffnet und eine Verbindung zwischen der Arbeitskammer 3 und der Unterdruckkammer 4 hergestellt wird. Die Arbeitskammer 3 wird evakuiert und es stellt sich wieder der in Fig. 1 gezeigte Ausgangszustand ein.

Aus der vorstehenden Beschreibung ist ersichtlich, daß letztlich die Druckfeder 22 die Auslöseschwelle der Bremsassistentfunktion festlegt. Diese Auslöseschwelle darf nicht zu niedrig gewählt werden, da es sonst zu ungewollten Vollbremsungen kommen könnte, sie darf andererseits aber auch nicht zu hoch gewählt werden, damit es auch bei einem nicht so kräftigen Fahrer im Rahmen einer Notbremsung zur gewünschten Auslösung der Bremsassistentfunktion kommt.

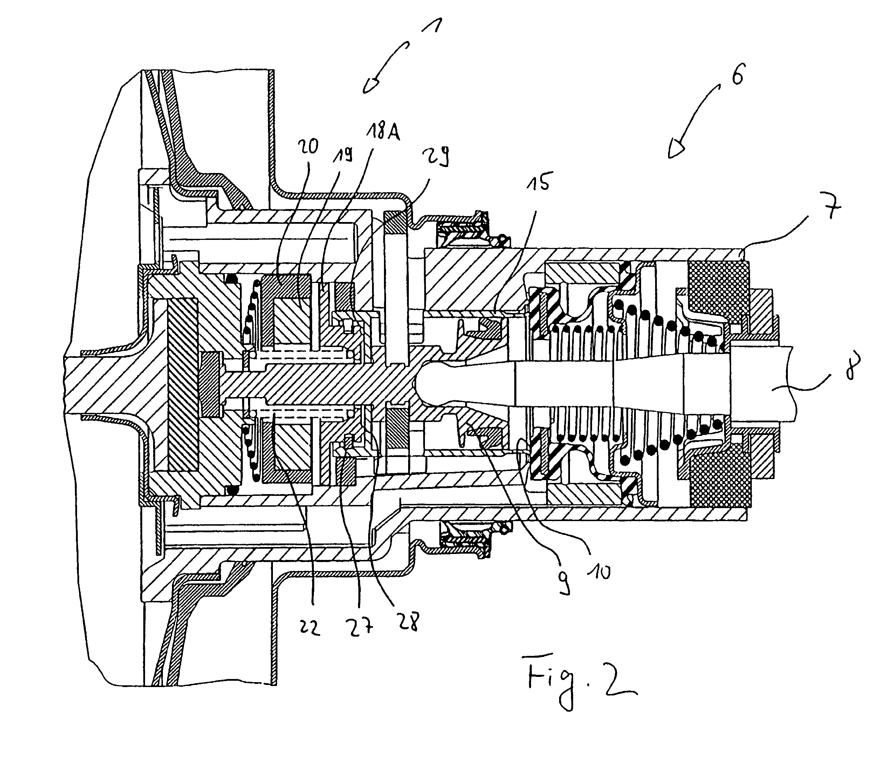

In Figur 2 ist ein zweites Ausführungsbeispiel eines Unterdruckbremskraftverstärkers 1 dargestellt. Der Abstand zwischen dem Permanentmagneten 19 und dem Anker 18A wird wie im ersten Ausführungsbeispiel durch Variation der axialen Erstreckung einer Ankerbaugruppe eingestellt. Die in Figur 2 dargestellte Ankerbaugruppe weist neben dem Anker 18B einen hülsenförmigen Fortsatz 15 auf, welcher über einen Sicherungsring 27 mit dem Anker 18B verbunden ist. Ein Ventilsitz 10 wird wiederum von dem freien Ende des hülsenförmigen Fortsatzes 15 gebildet.

Der Anker 18A weist eine dem hülsenförmigen Fortsatz 15 zugewandte umlaufende Ringfläche 28 auf, welche mit einer Stirnfläche 29 des hülsenförmigen Fortsatzes 15 in Verbindung steht. Über die Rückstellfeder 22 wird sichergestellt, daß dieser Kontakt zwischen der Ringfläche 28 und der Stirnfläche 29 zumindest dann besteht, wenn der Unterdruckbremskraftverstärker 1 nicht betätigt ist.

Die Ringfläche 28 ist als ein deformierbarer Fortsatz des Ankers 18A ausgestaltet. Durch eine Verformung der Ringfläche 28 in axialer Richtung ist es daher möglich, die axiale Erstreckung der Ankerbaugruppe 15, 18A, 27 und damit den Abstand zwischen Anker 18A und Ventilsitz 10 einzustellen. Anstatt oder zusätzlich zur Ausbildung der deformierbaren Ringfläche 28 am Anker 18A kann ein der Ringfläche 28 entsprechender Fortsatz auch an der dem Anker 18A zugewandten Stirnfläche 29 des hülsenförmigen Fortsatzes 15 angeordnet sein.

Um den Anker 18A nach erfolgter Auslösung des Bremsassistenten von dem Permanentmagneten 19 wieder abzulösen, werden der hülsenförmige Fortsatz 15 und der Anker 18A über den Sicherungsring 27 derart verbunden, daß die Rückhubbewegung des hülsenförmigen Fortsatzes 15 über den Sicherungsring 27 auf den Anker 18A übertragen wird. Ein vorhandenes Spiel zwischen der den Sicherungsring 27 aufnehmenden Nut im Anker 18A und dem Sicherungsring 27 ist dabei derart bemessen, daß der Anker 18A bei einer Verformung der Ringfläche 28 während des Zusammenbaus der Ankerbaugruppe 15, 18A, 27 entsprechend nachrücken kann, ohne daß das Nachrücken von dem Sicherungsring 27 behindert wird.

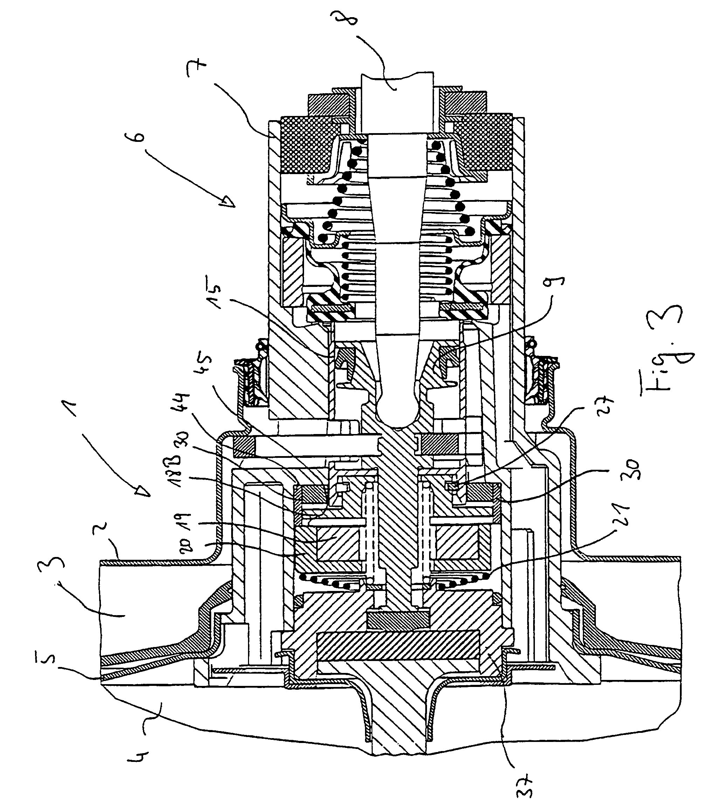

In Figur 3 ist ein Unterdruckbremskraftverstärker 1 dargestellt, bei welchem die axiale Position des Permanentmagneten 19 relativ zum Steuerventilgehäuse 7 einstellbar ist. Die Ankerbaugruppe 15, 18A, 27 des Unterdruckbremskraftverstärkers gemäß Figur 3 stimmt abgesehen von dem Fehlen einer verformbaren Ringfläche mit der in Figur 2 dargestellten Ankerbaugruppe überein.

Abweichend von der in Figur 2 dargestellten Ankerbaugruppe liegt die Permanentmagnethalterung 20 nicht mehr direkt an einer Stufe des Steuerventilgehäuses 7 an. Vielmehr ist zwischen der dem Eingangsglied 8 zugewandten Stirnfläche 44 der Halterung 20 und einer der Arbeitskammer 3 zugewandten Stirnfläche 44 eines Anschlages des Steuerventilgehäuses 7 ein Abstandselement 30 angeordnet. Das Abstandselement ist als ein den kreisringförmigen Anker 18B konzentrisch umgebender Einstellring 30 ausgebildet. Durch die zwischen dem Boden der Halterung 20 und dem Steuerventilgehäuse-Einsatz 37 angeordnete, vorgespannte Feder 21 wird sichergestellt, daß die Halterung 20 ständig mit dem Einstellring 30 in Kontakt ist.

Der Abstand zwischen dem Permanentmagneten 19 und dem Anker 18B bzw. die axiale Position des Permanentmagneten 19 relativ zum Gehäuse 7 läßt sich nun durch Wahl eines Einstellringes 30 mit entsprechenden Abmessungen oder Umformen eines Standardeinstellringes gezielt einstellen.

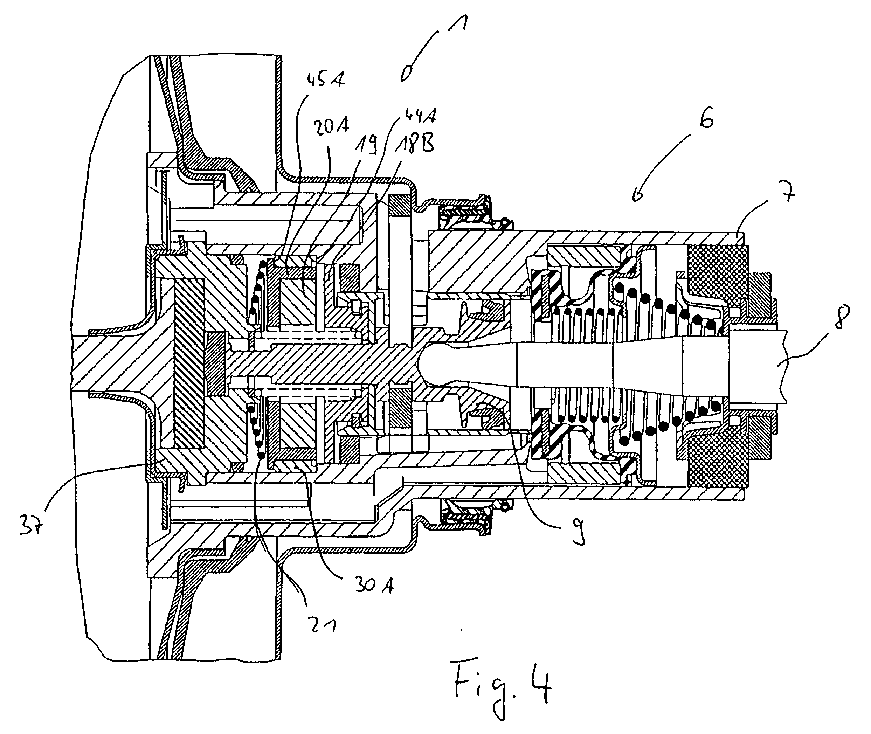

In Figur 4 ist ein weiteres Ausführungsbeispiel eines Unterdruckbremskraftverstärkers 1 mit einstellbarer axialer Position des Permanentmagneten 19 relativ zum Steuerventilgehäuse 7 dargestellt. Die in Figur 4 dargestellte Ausführungsform entspricht im wesentlichen dem in Figur 3 abgebildeten Unterdruckbremskraftverstärker 1. Abweichend hiervon ist das Abstandselement 30A jedoch als ein die Halterung 20A des Permanentmagneten 19 konzentrisch umgebender Einstellring ausgebildet. Der Einstellring 30A weist zur Halterung 20A des Permanentmagneten 19 ein Spiel auf und ist einerseits mit einer Stirnfläche 44A des Steuerventilgehäuses 7 und andererseits mit einer Stirnfläche 45A der Halterung 20A in Kontakt. Durch eine vorgespannte Feder 21, welche zwischen der Rückseite der Halterung 20A und dem Steuerventilgehäuse-Einsatz 37 angeordnet ist, wird dieser Kontakt sichergestellt.

Wiederum läßt sich durch Wahl eines Einstellringes 30A mit geeigneten Abmessungen bzw. entsprechendes Umformen des Einstellringes 30A die axiale Position des Permanentmagneten 19 relativ zum Steuerventilgehäuse 7 einstellen.

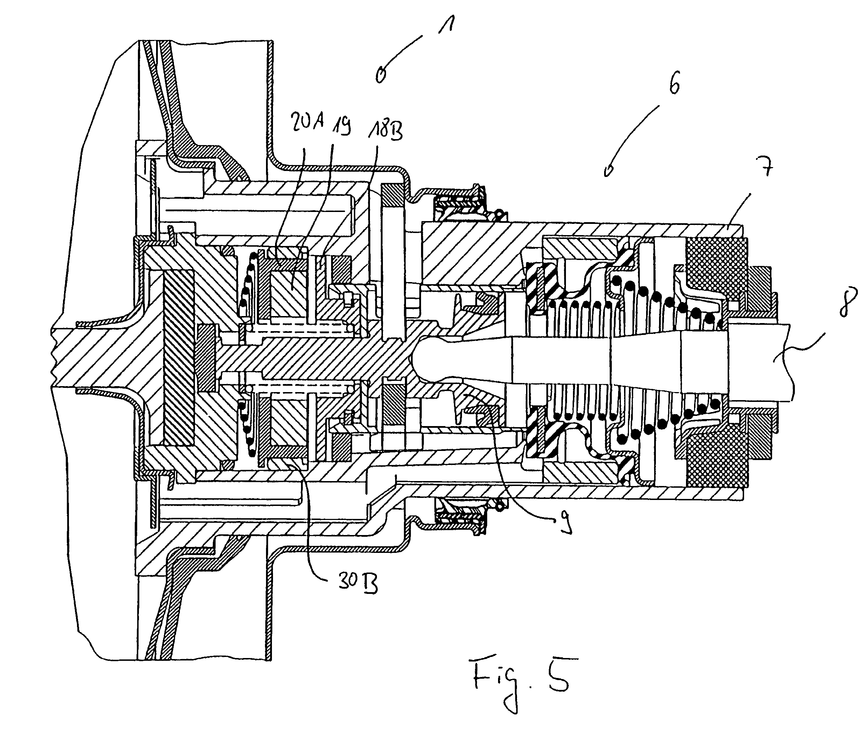

In Figur 5 ist ein fünftes Ausführungsbeispiel eines Unterdruckbremskraftverstärkers 1 dargestellt, welches auf dem in Figur 4 skizzierten Ausführungsbeispiel aufbaut. Bei dem in Figur 5 dargestellten Ausführungsbeispiel ist das als Einstellring 30B ausgebildete Abstandselement im Gegensatz zum vierten Ausführungsbeispiel nicht bezüglich der Halterung 20 mit Spiel behaftet, sondern durch einen Preßpassungssitz mit der Halterung 20 verbunden. Der Preßpassungssitz wurde so ausgestaltet, daß die während des Betriebes des Unterdruckbremskraftverstärkers 1 auftretende Kräfte ohne eine axiale Relativverschiebung des Einstellringes 30B zur Halterung 20A aufgenommen werden können. Die Länge der Preßsitzverbindung zwischen dem Einstellring 30B und der Halterung 20A wurde entsprechend der gewünschten axialen Position des Permanentmagneten 19 relativ zum Steuerventilgehäuse 7 gewählt.

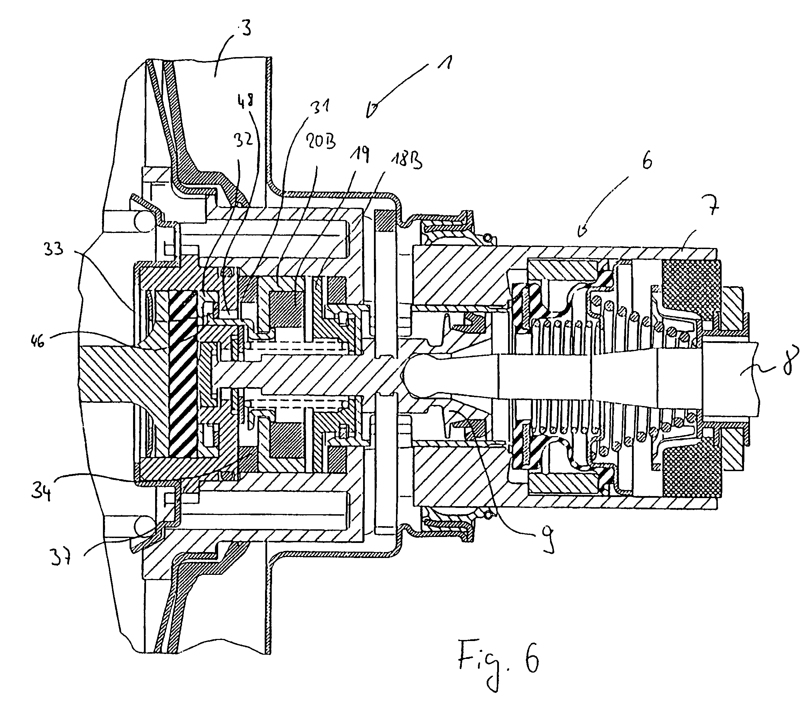

In Figur 6 ist ein sechstes Ausführungsbeispiel eines Unterdruckbremskraftverstärkers 1, bei welchem die axiale Position des Permanentmagneten 19 relativ zum Steuerventilgehäuse 7 einstellbar ist, dargestellt. Bei dem in Figur 6 dargestellten Ausführungsbeispiel ist ein sich in Richtung auf die Arbeitskammer 3 erstreckender Fortsatz 31 in Form einer Fesselungshülse vorhanden. Die Fesselungshülse 31 weist einen der Halterung 20B zugewandten Endabschnitt auf, welche die Halterung 20B innen hintergreift. An einem gegenüberliegenden Endabschnitt weist die Fesselungshülse 31 Haltearme (in Figur 6 ist nur ein einziger dargestellt) auf, welche sich in Richtung auf die Arbeitskammer 3 durch Öffnungen 48 eines Steuerventilgehäuse-Einsatzes 37 erstrecken. Diese Arme der Fesselungshülse 31 weisen an ihrem Ende einen radial nach außen weisenden Flansch 46 auf, der wiederum ein Abstandselement 33 hintergreift. Das Abstandselement 33 ist als kreisringförmige Scheibe ausgestaltet, welche mit Ihrer dem Eingangsglied 8 zugewandten Stirnfläche am Grund einer Bohrung innerhalb des Steuerventilgehäuse-Einsatzes 37 anliegt. Der Steuerventilgehäuse-Einsatz 37 wiederum steht in mechanischer Wirkverbindung zum Steuerventilgehäuse 7. Erneut kann durch Verwendung von Abstandselementen 33 mit unterschiedlichen Abmessungen bzw. entsprechendes Umformen eines Abstandselementes 33 die Lage des Permanentmagneten 19 relativ zum Steuerventilgehäuse 7 und somit der Luftspalt zwischen Permanentmagnet 19 und Anker 18B eingestellt werden. Zur Übertragung von Kräften von dem Steuerventilgehäuse 7 auf die Reaktionsscheibe 24 ist in der Bohrung des Einsatzes 37 zusätzlich ein Stützring 32 angeordnet, der eine einen Freiraum bildende Aussparung aufweist, in welcher das Abstandselement 33 aufgenommen ist. Auf diese Weise lassen sich die Kräfte um das Abstandselement 33 herum leiten.

In der Regel reichen die Anziehungskräfte des Permanentmagneten 19 in Ausgangsstellung auf den Anker 18B aus, um die Halterung 20B gegen das umgreifende, flanschartige Ende des Fesselungshülse 31 anzulegen. Um die Anlage der Halterung 20B an die Fesselungshülse 31 jedoch eindeutiger zu definieren, kann ein elastisches Ringelement 34 zwischen Halterung 20B und Steuerventilgehäuse-Einsatz 37 angeordnet werden. Das elastische Ringelement 34, welches beispielsweise aus Gummi gefertigt sein kann, muß so viel an Deformationsweg zur Verfügung stellen, daß kein Spiel zwischen Halterung 20B und Ringelement 34 entstehen kann.

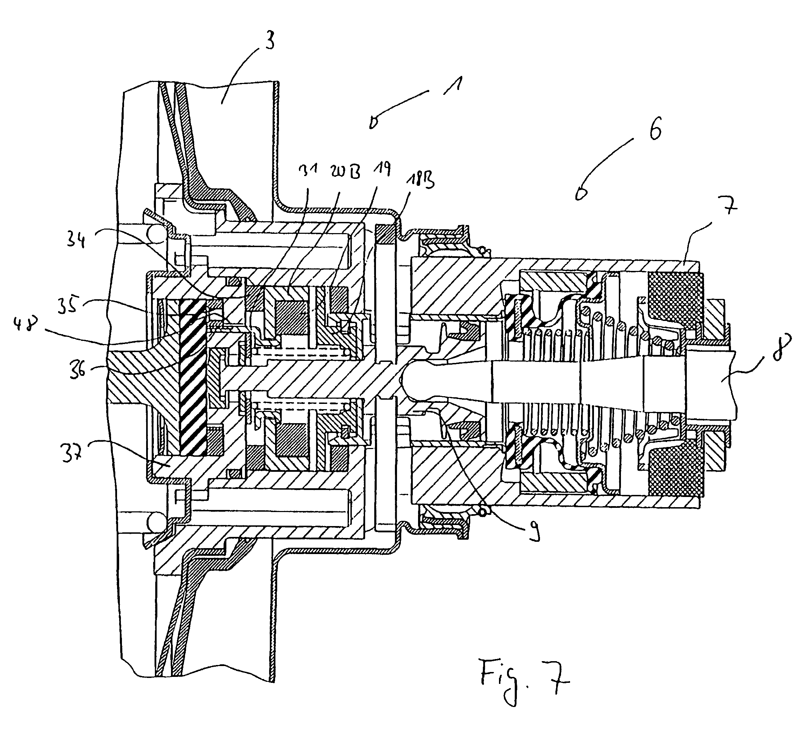

Ein siebtes Ausführungsbeispiel eines Unterdruckbremskraftverstärkers 1 mit justierbarem Abstand zwischen Anker 18B und Permanentmagnet 19 ist in Figur 7 dargestellt. Ähnlich wie in Figur 6, weist der in Figur 7 dargestellte Unterdruckbremskraftverstärker 1 eine Permanentmagnethalterung 20B mit sich in Richtung auf die Arbeitskammer 3 erstreckendem Fortsatz 31 in Form einer Fesselungshülse 31 auf. Die Fesselungshülse 31 weist wiederum einen die Halterung 20B innen hintergreifenden Endabschnitt auf. Weiterhin besitzt die Fesselungshülse 31 mehrere Arme (in Figur 7 ist nur ein einziger dargestellt), welche sich durch entsprechende Öffnungen 48 im Boden einer Bohrung des Einsatzes 37 erstrecken. Die aus den Öffnungen 48 ragenden Bereiche der Arme der Fesselungshülse 31 sind mit einem Außengewinde 36 versehen. Dieses Außengewinde 36 steht in ständigem Eingriff mit einem komplementären Innengewinde eines Einstellringes 35, welcher im Grund der Bohrung des Einsatzes 37 eingelegt ist. Durch Drehung des Einstellringes 35 kann nunmehr die Lage des Permanentmagneten 19 relativ zum Anker 18B eingestellt werden. Da der Einsatz 37 fest mit dem Gehäuse 7 verbunden ist, kann sich die Drehbewegung des Einstellringes 35 nicht auf die Halterung 20B bzw. den Permanentmagneten 19 übertragen. Die Arme der Fesselungshülse 31 kommen im Falle einer Drehbewegung des Einstellringes 35 nämlich in Anlage mit den die Öffnungen 48 begrenzenden Wänden des Einsatzes 37.

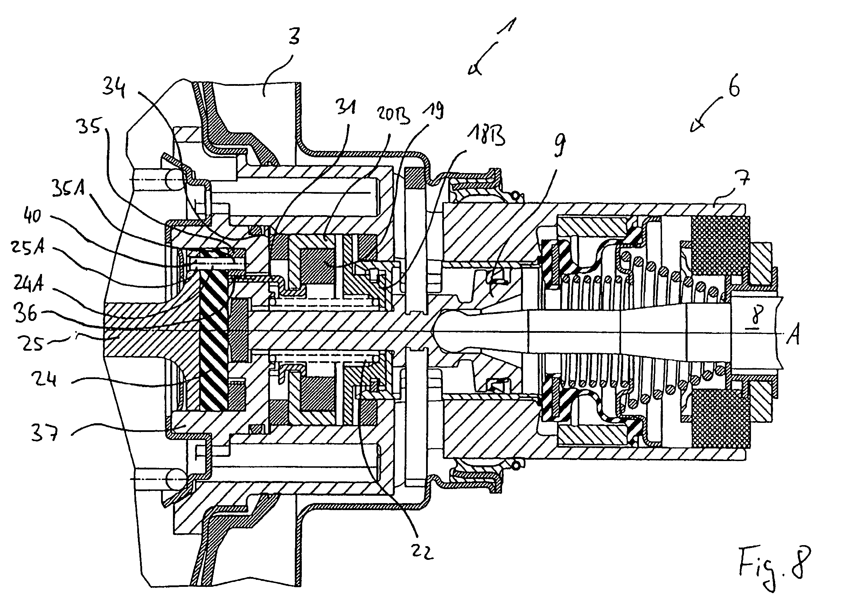

In Figur 8 ist ein achtes Ausführungsbeispiel eines Unterdruckbremskraftverstärkers 1 mit justierbarem Abstand zwischen Anker 18B und Permanentmagnet 19, welches auf dem in Figur 7 dargestellten Ausführungsbeispiel aufbaut, gezeigt. Abweichend von dem in Figur 7 dargestellten Ausführungsbeispiel stützt sich die Rückstellfeder 22 für den Anker 18B jedoch nicht über eine Ringscheibe, sondern direkt am Einsatz 37 des Steuerventilgehäuses 7 ab. Weiterhin sind Reaktionskolben 25 und Reaktionsscheibe 24 jeweils mit einer axial verlaufenden Öffnung 25A, 24A versehen, welche jeweils fluchtend zu einer ebenfalls axial verlaufenden Öffnung 35A des Einstellringes 35 verlaufen.

Durch diese Öffnungen 24A, 25A, 35A von Reaktionsscheibe 24, Reaktionskolben 25 und Steuerventilgehäuse-Einsatz 37 erstreckt sich ein Kraftübertragungselement 40 in Gestalt eines zylindrischen Stiftes. Diese Kraftübertragungsanordnung aus Reaktionskolben 25, Reaktionsscheibe 24, Einstellring 35 und Kraftübertragungselement 40 gewährleistet, daß sich ein in den Reaktionskolben 25 eingeleitetes Drehmoment auf den Einstellring 35 überträgt und zur Einstellung der axialen Lage des Permanentmagneten 19 relativ zum Steuerventilgehäuse 7 verwendet werden kann. An den Reaktionskolben 25 ist eine nicht dargestellte Schlüsselfläche angeformt, welche die Einleitung eines Drehmomentes in den Reaktionskolben 25 ermöglicht.

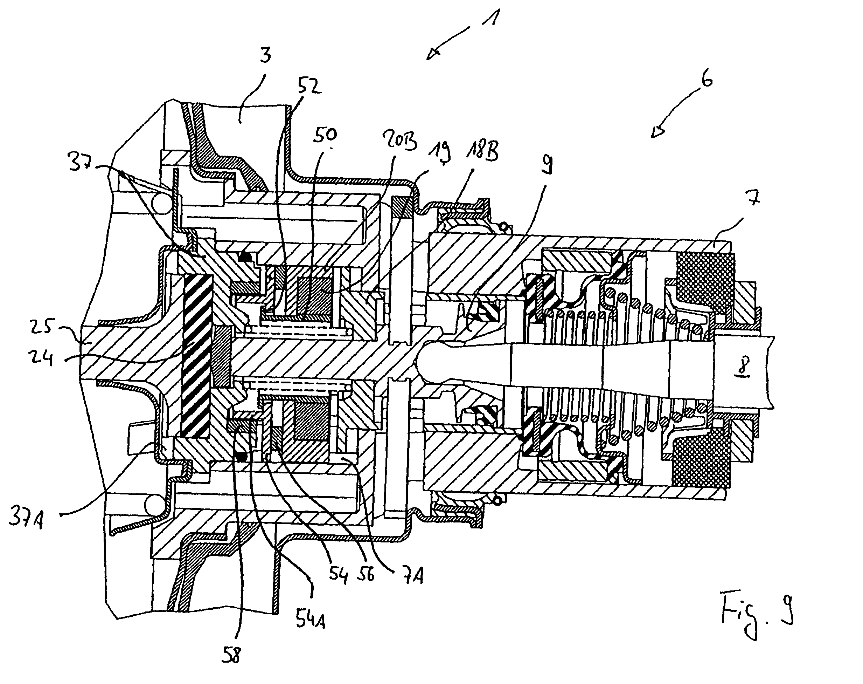

In Figur 9 ist ein neuntes Ausführungsbeispiel eines Unterdruckkraftverstärkers 1 mit justierbarem Abstand zwischen Anker 18B und Permanentmagnet 19 dargestellt.

Der Permanentmagnet 19 und eine Halterung 20B des Permanentmagneten 19 weisen eine zentrale Öffnung auf. Ein sich in Richtung auf die Arbeitskammer 3 erstreckender hohlzylindrischer Fortsatz 50 ragt in diese zentrale Öffnung und ist über seinen in diese zentrale Öffnung ragenden Abschnitt mit dem Permanentmagneten 19 und dessen Halterung 20B verbunden. An seinem der Arbeitskammer 3 zugewandten Ende besitzt der hohlzylindrische Fortsatz 50 einen sich radial nach außen erstreckenden Kragen 52. Dieser Kragen 52 hintergreift ein beweglich innerhalb des Steuerventilgehäuses 7 geführtes Ringelement 54. Zwischen einer dem Eingangsglied 8 zugewandten Stirnfläche des Ringelementes 54 und einer der Arbeitskammer 3 zugewandten Stirnfläche der Permanentmagnethalterung 20B ist ein ebenfalls ringförmiges elastisches Element 56 aus einem Elastomermaterial angeordnet.

Das Ringelement 54 ist mit einem sich in Richtung auf den Reaktionskolben 25 erstreckenden hohlzylindrischen Fortsatz 54A versehen, welcher radial außen mit einem Gewinde versehen ist und in eine Aussparung des Steuerventilgehäuse-Einsatzes 37 ragt. Ein komplementäres Gewinde zur Anbindung des hülsenförmigen Fortsatzes 54A des Ringelementes 54 ist radial innen an einem ringförmigen Einsatz 58 ausgebildet. Dieser Einsatz 58 ist radial innen an der Aussparung des Steuerventilgehäuse-Einsatzes 37 angeordnet und fest mit dem Steuerventilgehäuse-Einsatz 37 verbunden.

Der Steurventilgehäuse-Einsatz 37, welcher das Steuerventilgehäuse 7 an seinem dem Reaktionskolben 25 zugewandten Ende abschließt, ist drehbar innerhalb des Steuerventilgehäuses 7 geführt und bezüglich einer axialen Verschiebung starr mit diesem verbunden. Die den Permanentmagneten 19 aufnehmende Permanentmagnethalterung 20B hingegen ist zwar in axialer Richtung beweglich, eine Rippenstruktur 12A des Steuerventilgehäuses 7 befindet sich jedoch in Eingriff mit radial nach außen ragenden Fortsätzen der Permanentmagnethalterung 20B, so daß ein Mitdrehen des Permanentmagneten 19 bei einer Drehbewegung des Steuerventilgehäuse-Einsatzes 37 relativ zum Steuerventilgehäuse 7 ausgeschlossen ist. Statt dessen bewirkt eine Drehung des Steuerventilgehäuse-Einsatzes 37 eine axiale Verschiebung des in der Halterung 20B angeordneten Permanentmagneten 19, welche darauf zurückzuführen ist, daß der Permanentmagnet 19 über ein Gewinde mit dem Steuerventilgehäuse-Einsatz 37 gekoppelt ist.

Der Steuerventilgehäuse-Einsatz 37 weist eine Struktur 37A in Gestalt einer Schlüsselfläche auf, um das Einleiten eines Drehmomentes in den Steuerventilgehäuse-Einsatz 37 zu erleichtern.

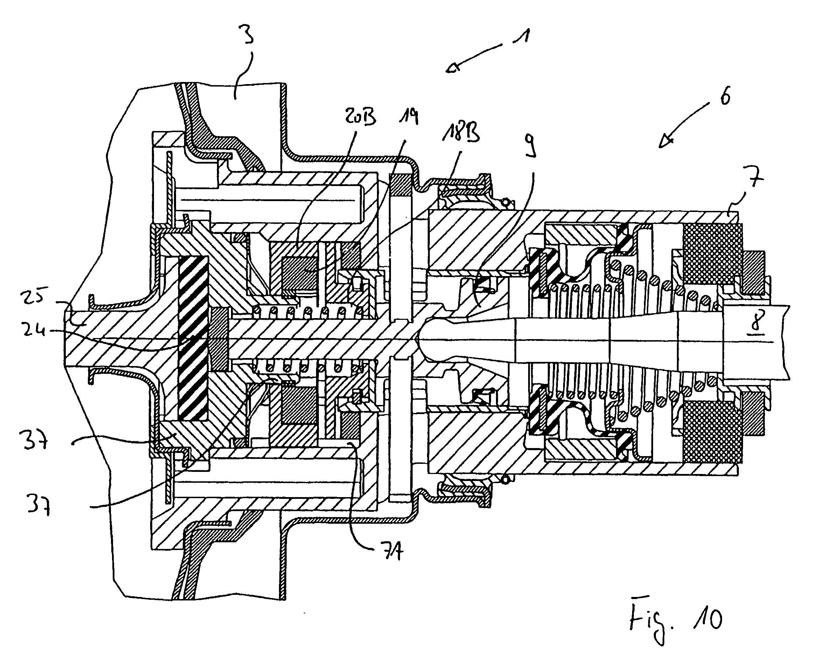

Ein zehntes Ausführungsbeispiel eines Uncerdruckbremskraftverstärkers 1 mit justierbarem Abstand zwischen Anker 18B und Permanentmagnet 19 ist in Figur 10 dargestellt. Ähnlich wie in Figur 9 ist der das Steuerventilgehäuse 7 an seinem dem Reaktionskolben 25 zugewandten Ende abschließende Steuerventilgehäuse-Einsatz 37 drehbar innerhalb des Steuerventilgehäuses 7 gelagert und über ein Gewinde mit dem in einer Halterung 20B angeordneten Permanentmagneten 18B verbunden.

Der Steuerventilgehäuse-Einsatz 37 weist einen hohlzylindrischen Fortsatz 37B auf, welcher sich in Richtung auf das Eingangsglied 8 in eine zentrale Öffnung der Einheit aus Permanentmagnet 19 und Permanentmagnethalterung 20B erstreckt. Dieser Fortsatz 37A ist radial außen mit einem Gewinde versehen, welches mit einem komplementären Gewinde zusammenwirkt, das radial innen am Permanentmagneten 19 ausgebildet ist.

Eine Drehung der in axialer Richtung beweglichen Permanentmagnethalterung 20B relativ zum Steuerventilgehäuse 7 wird wiederum durch eine Rippenstruktur 7A des Steuerventilgehäuses 7, welche mit radial nach außen ragenden Fortsätzen der Halterung 20B zusammenwirkt, verhindert. Da der drehbare Steuerventilgehäuse-Einsatz 37 über ein Gewinde mit dem lediglich in axialer Richtung beweglichen Permanentmagneten 19 gekoppelt ist, bewirkt eine Drehung des Steuerventilgehäuse-Einsatzes 37 eine axiale Verschiebung des Permanentmagneten 19. Um die Einleitung eines Drehmomentes in den SteuerventilgehäuseEinsatz 37 erleichtern, ist auf einer dem Eingangsglied 8 abgewandten Stirnfläche des Steuerventilgehäuse-Einsatzes 37 eine entsprechende Struktur ausgebildet.

Die in den Figuren 7 bis 10 dargestellten Ausführungsformen von Unterdruckbremskraftverstärkern 1 gestatten die Einstellung eines Abstandes zwischen Anker 18B und Permanentmagnet 19 auch noch nach der Montage des Unterdruckbremskraftverstärkers. Somit läßt sich nach der Montage die Auslöseschwelle des Bremsassistenten gezielt auf einen vorgegeben Wert einstellen.

## Patentansprüche

1. Unterdruckbremskraftverstärker (1), mit
- einer Unterdruckkammer (4) und einer davon durch eine bewegliche Wand (5) druckdicht getrennten Arbeitskammer (3),
- einem Steuerventil (6), das ein mit der beweglichen Wand (5) kraftübertragend gekoppeltes Gehäuse (7) und einen darin angeordneten Ventilsitz (10) aufweist, der zur Erzielung einer Druckdifferenz an der beweglichen Wand (5) die Zufuhr von Atmosphärendruck oder Überdruck zur Arbeitskammer (3) in Abhängigkeit der Verschiebung eines Eingangsgliedes (8) des Bremskraftverstärkers (1) zu steuern vermag,
- einer Notbremshilfe mit einem Permanentmagneten (19) und einem mit dem Permanentmagneten (19) zusammenwirkenden Anker (18, 18A, 18B), der federnd entgegen der Betätigungsrichtung vorgespannt ist und bei einer Notbremsung in Anlage mit dem Permanentmagneten (19) gezogen wird, wodurch das Steuerventil (20) für die Zufuhr von Atmosphärendruck oder Überdruck zur Arbeitskammer (18) geöffnet gehalten wird,
**dadurch gekennzeichnet, daß** zur Justierung des Abstandes zwischen dem Anker (18, 18A, 18B) und dem Permanentmagneten (19) die axiale Position des Permanentmagneten (19) relativ zum Steuerventilgehäuse (7) und/oder der Abstand zwischen dem Anker (18, 18A, 18B) und dem Ventilsitz (10) einstellbar ist.

2. Unterdruckbremskraftverstärker nach Anspruch 1,
**dadurch gekennzeichnet, daß** der Anker (18, 18A, 18B) und der Ventilsitz (10) als getrennte Bauteile ausgestaltet sind.

3. Unterdruckbremskraftverstärker nach Anspruch 2,
**dadurch gekennzeichnet, daß** der Ventilsitz (10) als Hülse ausgestaltet ist, wobei ein Hülsenende mit dem Anker (18, 18A, 18B) gekoppelt ist und das entgegengesetzte Hülsenende mit einem Ventildichtglied (11) zusammenwirkt.

4. Unterdruckbremskraftverstärker nach Anspruch 2 oder 3,
**dadurch gekennzeichnet, daß** zwischen dem Anker (18, 18A, 18B) und dem Ventilsitz (10) ein Abstandselement angeordnet ist, über dessen axiale Erstreckung der Abstand zwischen Anker (18, 18A, 18B) und Ventilsitz (10) eingestellt ist.

5. Unterdruckbremskraftverstärker nach einem der Ansprüche 2 bis 4,
**dadurch gekennzeichnet, daß** der Anker (18, 18A, 18B) über eine Schraubverbindung (47) mit dem Ventilsitz (10) gekoppelt ist, wobei über die Länge der Schraubverbindung (47) der Abstand zwischen Anker (18, 18A, 18B) und Ventilelement (10) eingestellt ist.

6. Unterdruckbremskraftverstärker nach einem der Ansprüche 2 bis 4,
**dadurch gekennzeichnet, daß** der Anker (18, 18A, 18B) und der Ventilsitz (10) über einen Preßsitz miteinander verbunden sind, wobei über die Länge der Preßsitzverbindung der Abstand zwischen Anker (18, 18A, 18B) und Ventilsitz (10) eingestellt ist.

7. Unterdruckbremskraftverstärker nach einem der Ansprüche 2 bis 6,
**dadurch gekennzeichnet, daß** der Anker (18, 18A, 18B) und/oder der Ventilsitz (10) einen sich in axialer Richtung erstreckenden, deformierbaren Fortsatz (28) aufweist, wobei über die Stärke der Deformation des Fortsatzes (28) der Abstand zwischen Anker (18, 18A, 18B) und dem Ventilsitz (10) eingestellt ist.

8. Unterdruckbremskraftverstärker nach einem der Ansprüche 1 bis 7,
**dadurch gekennzeichnet, daß** die axiale Position des Permanentmagneten (19) relativ zum Steuerventilgehäuse (7) durch ein Abstandselement (30, 30A, 30B) eingestellt ist, welches zwischen einer dem Eingangsglied (8) zugewandten Stirnfläche (45, 45A) des Permanentmagneten (19) oder einer Halterung (20, 20A, 20B) für den Permanentmagneten (19) einerseits und einer der Arbeitskammer (3) zugewandten Stirnfläche (44, 44A) des Steuerventilgehäuses (7) andererseits angeordnet ist.

9. Unterdruckbremskraftverstärker nach Anspruch 8,
**dadurch gekennzeichnet, daß** die axiale Position des Permanentmagneten (19) relativ zum Steuerventilgehäuse (7) über die Länge des Abstandselementes (30, 30A) eingestellt ist.

10. Unterdruckbremskraftverstärker nach Anspruch 8 oder 9,
**dadurch gekennzeichnet, daß** das Abstandselement (30A, 30B) den Permanentmagneten (19) oder dessen Halterung (20, 20A, 20B) konzentrisch umgibt.

11. Unterdruckbremskraftverstärker nach Anspruch 10,
**dadurch gekennzeichnet, daß** das Abstandselement (30B) und der Permanentmagnet (19) oder dessen Halterung (20) über einen Preßsitz relativ zueinander fixiert sind und die axiale Position des Permanentmagneten (19) relativ zum Steuerventilgehäuse (7) über die Länge der Preßsitzverbindung eingestellt ist.

12. Unterdruckbremskraftverstärker nach einem der Ansprüche 1 bis 11,
**dadurch gekennzeichnet, daß** der Permanentmagnet (19) oder dessen Halterung (20, 20A, 20B) über ein elastisches Element (21) entgegen der Betätigungsrichtung vorgespannt ist.

13. Unterdruckbremskraftverstärker nach einem der Ansprüche 1 bis 7,
**dadurch gekennzeichnet, daß** mit dem Permanentmagneten (19) oder einer Halterung (20, 20A, 20B) für den Permanentmagneten (19) ein sich in Richtung auf die Arbeitskammer (3) erstreckender Fortsatz (31) verbunden ist.

14. Unterdruckbremskraftverstärker nach Anspruch 13,
**dadurch gekennzeichnet, daß** der Fortsatz (31) einen oder mehrere Arme umfaßt, die sich durch Öffnungen (48) des Steuerventilgehäuses (7) oder eines entgegen der Betätigungsrichtung starr mit dem Steuerventilgehäuse (7) verbundenen Steuerventilgehäuse-Einsatzes (37) erstrecken.

15. Unterdruckbremskraftverstärker nach Anspruch 13 oder 14,
**dadurch gekennzeichnet, daß** der Fortsatz (31) an einem der Arbeitskammer (3) zugewandten Ende einen radial nach außen sich erstreckenden Flansch (46) aufweist und der Flansch (46) ein Abstandselement (33) hintergreift, das entgegen der Betätigungsrichtung starr mit dem Steuerventilgehäuse (7) gekoppelt ist.

16. Unterdruckbremskraftverstärker nach Anspruch 13 oder 14,
**dadurch gekennzeichnet, daß** der Fortsatz (31) an einem der Arbeitskammer (3) zugewandten Ende ein Gewinde (36) aufweist, welches mit einem entgegen der Betätigungsrichtung starr mit dem Steuerventilgehäuse (7) gekoppelten komplementären Gewinde zusammenwirkt.

17. Unterdruckbremskraftverstärker nach Anspruch 16,
**dadurch gekennzeichnet, daß** das Gewinde des Fortsatzes (31) zumindest an einem sich durch die Öffnungen (48) des Steuerventilgehäuses (7) oder Steuerventilgehäuseeinsatzes (37) erstrekkenden Bereich des Fortsatzes (31) ausgebildet ist.

18. Unterdruckbremskraftverstärker nach Anspruch 16 oder 17,
**dadurch gekennzeichnet, daß** das Gewinde des Fortsatzes (31) mit dem komplementären Gewinde eines drehbaren Einstellringes (35) zusammenwirkt.

19. Unterdruckbremskraftverstärker nach einem der Ansprüche 15 bis 18,
**dadurch gekennzeichnet, daß** zwischen dem Abstandselement (33) oder dem Einstellring (35) einerseits und dem Permanentmagneten (19) oder dessen Halterung (20, 20A, 20B) andererseits ein unter Vorspannung stehendes elastisches Element (34) angeordnet ist, welches das Abstandselement (33) oder den Einstellring (35) einerseits und den Permanentmagneten (19) oder dessen Halterung (20, 20A, 20B) andererseits voneinander weg drückt.

20. Unterdruckbremskraftverstärker nach Anspruch 18 oder 19,
**dadurch gekennzeichnet, daß** ein Kraftabgabeelement (25) vorgesehen ist, welches relativ zum Steuerventilgehäuse (7) drehbar ist und welches bezüglich einer Drehbewegung starr mit dem Einstellring (35) gekoppelt ist.

21. Unterdruckbremskraftverstärker nach Anspruch 20,
**dadurch gekennzeichnet, daß** das Kraftabgabeelement (25) und der Einstellring (35) jeweils mit mindestens einer, sich in axialer Richtung erstreckenden Öffnung (25A, 35A) versehen sind, wobei sich durch fluchtende Öffnungen (25A, 35A) von Einstellring (35) und Kraftabgabeelement (25) jeweils ein Kraftübertragungselement (40) erstreckt.

22. Unterdruckbremskraftverstärker nach Anspruch 20 oder 21,
**dadurch gekennzeichnet, daß** das Kraftübertragungselement (25) mit einer Struktur zur Einleitung eines Drehmoments in das Kraftabgabeelement (25) versehen ist.

23. Unterdruckbremskraftverstärker nach einem der Ansprüche 1 bis 7,
**dadurch gekennzeichnet, daß** das Steuerventilgehäuse (7) auf einem der Arbeitskammer (3) zugewandten Ende einen drehbar innerhalb des Steuerventilgehäuses (7) angeordneten Einsatz (37) aufweist, welcher entgegen der Betätigungsrichtung starr mit dem Steuerventilgehäuse und über ein Gewinde mit dem Permanentmagneten (19) gekoppelt ist.

24. Unterdruckbremskraftverstärker nach Anspruch 23,
**dadurch gekennzeichnet, daß** der Permanentmagnet (19) mit dem Steuerventilgehäuse (7) bezüglich einer Drehbewegung um eine Längsachse (A) des Steuerventilgehäuses (7) starr gekoppelt ist.

25. Unterdruckbremskraftverstärker nach Anspruch 23 oder 24,
**dadurch gekennzeichnet, daß** der Steuerventilgehäuse-Einsatz (37) mit einer Struktur (37A) zur Einleitung eines Drehmomentes in den Steuerventilgehäuse-Einsatz (37) versehen ist.

26. Unterdruckbremskraftverstärker nach einem der Ansprüche 1 bis 25,
**dadurch gekennzeichnet, daß** der Ventilsitz (10) zumindest in Betätigungsrichtung des Eingangsgliedes (8) sowohl mit dem Eingangsglied (8) als auch mit dem Anker (18, 18A, 18B) gekoppelt ist.

## Claims

1. Vacuum brake booster (1), comprising
- a vacuum chamber (4) and a working chamber (3) separated in a pressure-proof manner from one another by a movable wall (5),
- a control valve (6), which comprises a housing (7) workingly coupled to the movable wall (5) and containing a valve seat (10), which to achieve a pressure difference at the movable wall (5) is capable of controlling the supply of atmospheric pressure or above-atmospheric pressure to the working chamber (3) in dependence upon the displacement of an input element (8) of the brake booster (1),
- an emergency braking aid comprising a permanent magnet (19) and an armature (18, 18A, 18B), which cooperates with the permanent magnet (19) and is spring-biased counter to the actuating direction and during an emergency braking operation is pulled into abutment with the permanent magnet (19), with the result that the control valve (6) is held open for the supply of atmospheric pressure or above-atmospheric pressure to the working chamber (3),
**characterized in that**, for adjusting the distance between the armature (18, 18A, 18B) and the permanent magnet (19), the axial position of the permanent magnet (19) relative to the control valve housing (7) and/or the distance between the armature (18, 18A, 18B) and the valve seat (10) is adjustable.

2. Vacuum brake booster according to claim 1,
**characterized in that** the armature (18, 18A, 18B) and the valve seat (10) are designed as separate components.

3. Vacuum brake booster according to claim 2,
**characterized in that** the valve seat (10) takes the form of a sleeve, wherein one sleeve end is coupled to the armature (18, 18A, 18B) and the opposite sleeve end cooperates with a valve sealing member (11).

4. Vacuum brake booster according to claim 2 or 3,
**characterized in that** a distance element is disposed between the armature (18, 18A, 18B) and the valve seat (10), wherein by means of the axial extension of the distance element the distance between armature (18, 18A, 18B) and valve seat (10) is adjusted.

5. Vacuum brake booster according to one of claims 2 to 4,
**characterized in that** the armature (18, 18A, 18B) is coupled by a screw connection (47) to the valve seat (10), wherein by means of the length of the screw connection (47) the distance between armature (18, 18A, 18B) and valve element (10) is adjusted.

6. Vacuum brake booster according to one of claims 2 to 4,
**characterized in that** the armature (18, 18A, 18B) and the valve seat (10) are connected to one another by an interference fit, wherein by means of the length of the interference fit connection the distance between armature (18, 18A, 18B) and valve seat (10) is adjusted.

7. Vacuum brake booster according to one of claims 2 to 6,
**characterized in that** the armature (18, 18A, 18B) and/or the valve seat (10) have/has an axially extending, deformable extension (28), wherein by means of the degree of deformation of the extension (28) the distance between armature (18, 18A, 18B) and the valve seat (10) is adjusted.

8. Vacuum brake booster according to one of claims 1 to 7,
**characterized in that** the axial position of the permanent magnet (19) relative to the control valve housing (7) is adjusted by means of a distance element (30, 30A, 30B), which is disposed between an end face (45, 45A) of the permanent magnet (19) facing the input element (8) or between a mounting (20, 20A, 20B) for the permanent magnet (19), on the one hand, and an end face (44, 44A) of the control valve housing (7) facing the working chamber (3), on the other hand.

9. Vacuum brake booster according to claim 8,
**characterized in that** the axial position of the permanent magnet (19) relative to the control valve housing (7) is adjusted by means of the length of the distance element (30, 30A).

10. Vacuum brake booster according to claim 8 or 9,
**characterized in that** the distance element (30A, 30B) concentrically surrounds the permanent magnet (19) or the latter's mounting (20, 20A, 20B).

11. Vacuum brake booster according to claim 10,
**characterized in that** the distance element (30B) and the permanent magnet (19) or the latter's mounting (20) are fixed relative to one another by means of an interference fit and the axial position of the permanent magnet (19) relative to the control valve housing (7) is adjusted by means of the length of the interference fit connection.

12. Vacuum brake booster according to one of claims 1 to 11,
**characterized in that** the permanent magnet (19) or the latter's mounting (20, 20A, 20B) is biased counter to actuating direction by an elastic element (21).

13. Vacuum brake booster according to one of claims 1 to 7,
**characterized in that** an extension (31) extending in the direction of the working chamber (3) is connected to the permanent magnet (19) or to a mounting (20, 20A, 20B) for the permanent magnet (19).

14. Vacuum brake booster according to claim 13,
**characterized in that** the extension (31) comprises one or several arms, which extend through openings (48) of the control valve housing (7) or of a control valve housing insert (37), which is connected counter to actuating direction rigidly to the control valve housing (7).

15. Vacuum brake booster according to claim 13 or 14,
**characterized in that** the extension (31) on an end facing the working chamber (3) has a radially outwardly extending flange (46) and the flange (46) engages behind a distance element (33), which is coupled counter to actuating direction rigidly to the control valve housing (7).

16. Vacuum brake booster according to claim 13 or 14,
**characterized in that** on an end facing the working chamber (3) the extension (31) has a thread (36) that cooperates with a complementary thread coupled counter to actuating direction rigidly to the control valve housing (7).

17. Vacuum brake booster according to claim 16,
**characterized in that** the thread of the extension (31) is formed at least on a region of the extension (31) extending through the openings (48) of the control valve housing (7) or control valve housing insert (37).

18. Vacuum brake booster according to claim 16 or 17,
**characterized in that** the thread of the extension (31) cooperates with the complementary thread of a rotatable setting ring (35).

19. Vacuum brake booster according to one of claims 15 to 18,
**characterized in that** a biased elastic element (34) is disposed between the distance element (33) or the setting ring (35), on the one hand, and the permanent magnet (19) or the latter's mounting (20, 20A, 20B), on the other hand, the biased elastic element (34) pressing the distance element (33) or the setting ring (35), on the one hand, and the permanent magnet (19) or the latter's mounting (20, 20A, 20B), on the other hand, away from one another.

20. Vacuum brake booster according to claim 18 or 19,
**characterized in that** a force output element (25) is provided, which is rotatable relative to the control valve housing (7) and which is coupled, with regard to a rotational movement, rigidly to the setting ring (35).

21. Vacuum brake booster according to claim 20,
**characterized in that** the force output element (25) and the setting ring (35) are each provided with at least one axially extending opening (25A, 35A), wherein extending through aligned openings (25A, 35A) of setting ring (35) and force output element (25) there is in each case a force transmission element (40).

22. Vacuum brake booster according to claim 20 or 21,
**characterized in that** the force transmission element (25) is provided with a structure for introducing a torque into the force output element (25).

23. Vacuum brake booster according to one of claims 1 to 7,
**characterized in that** at an end facing the working chamber (3) the control valve housing (7) has an insert (37), which is rotatably disposed inside the control valve housing (7) and which is coupled counter to actuating direction rigidly to the control valve housing and by a thread to the permanent magnet (19).

24. Vacuum brake booster according to claim 23,
**characterized in that** the permanent magnet (19) is coupled, with regard to a rotational movement about a longitudinal axis (A) of the control valve housing (7), rigidly to the control valve housing (7).

25. Vacuum brake booster according to claim 23 or 24,
**characterized in that** the control valve housing insert (37) is provided with a structure (37A) for introducing a torque into the control valve housing insert (37).

26. Vacuum brake booster according to one of claims 1 to 25,
**characterized in that** the valve seat (10) is coupled at least in actuating direction of the input element (8) both to the input element (8) and to the armature (18, 18A, 18B).

## Revendications

1. Servofrein à dépression (1 ), comprenant
- une chambre à dépression (4) et une chambre de travail (3), les chambres étant séparées l'une de l'autre de manière étanche à la pression par une paroi mobile (5),
- une vanne de commande (6) comportant un boîtier (7) couplé à la paroi mobile (5) en transmission de force et comportant un siège de vanne (10) disposé dans le boîtier et apte à commander l'admission de la pression atmosphérique ou d'une surpression dans la chambre de travail (3) en fonction du déplacement d'un élément d'entrée (8) du servofrein à dépression (1) afin de générer une différence de pression sur la paroi mobile (5),
- un frein de secours asservi comportant un aimant permanent (19) et une armature (18, 18A, 18B) coopérant avec l'aimant permanent (19) et précontrainte de façon élastique en sens inverse à la direction d'actionnement et qui est tirée au contact avec l'aimant permanent (19) lors d'un freinage d'arrêt d'urgence, ce qui garde la vanne de commande (20) ouverte pour l'admission de pression atmosphérique ou de surpression à la chambre de travail (3),
**caractérisé en ce que**, afin d'ajuster la distance entre l'armature (18, 18A, 18B) et l'aimant permanent (19), la position axiale de l'aimant permanent (19) par rapport au boîtier de vanne de commande (7) et/ou la distance entre l'armature (18, 18A, 18B) et le siège de vanne (10) est réglable.

2. Servofrein à dépression selon la revendication 1, **caractérisé en ce que** l'armature (18, 18A, 18B) et le siège de vanne (10) sont réalisés sous forme de composants séparés.

3. Servofrein à dépression selon la revendication 2, **caractérisé en ce que** le siège de vanne (10) est réalisé sous forme de douille, une extrémité de la douille étant couplée à l'armature (18, 18A, 18B), l'extrémité opposée de la douille coopérant avec un élément d'étanchéité de vanne (11).

4. Servofrein à dépression selon la revendication 2 ou 3, **caractérisé en ce qu'**un élément d'écartement est disposé entre l'armature (18, 18A, 18B) et le siège de vanne (10), la distance entre l'armature (18, 18A, 18B) et le siège de vanne (10) étant ajustée par l'étendue axiale de cet élément.

5. Servofrein à dépression selon l'une des revendications 2 à 4, **caractérisé en ce que** l'armature (18, 18A, 18B) est couplée par un raccordement à vis (47) au siège de vanne (10), la distance entre l'armature (18, 18A, 18B) et l'élément de vanne (10) étant ajustée par la longueur du raccordement à vis (47).

6. Servofrein à dépression selon l'une des revendications 2 à 4, **caractérisé en ce que** l'armature (18, 18A, 18B) et le siège de vanne (10) sont connectés par un ajustage serré, la distance entre l'armature (18, 18A, 18B) et le siège de vanne (10) étant ajustée par la longueur du raccordement à ajustage serré.

7. Servofrein à dépression selon l'une des revendications 2 à 6, **caractérisé en ce que** l'armature (18, 18A, 18B) et/ou le siège de vanne (10) comprend un prolongement (28) s'étendant en direction axiale et déformable, la distance entre l'armature (18, 18A, 18B) et le siège de vanne (10) étant ajustée par le degré de déformation du prolongement (28).

8. Servofrein à dépression selon l'une des revendications 1 à 7, **caractérisé en ce que** la position axiale de l'aimant permanent (19) par rapport au boîtier de vanne de commande (7) est réglée par un élément d'écartement (30, 30A, 30B) disposé entre une face frontale (45, 45A) de l'aimant permanent (19) faisant face à l'élément d'entrée (8), ou une fixation (20, 20A, 20B) de l'aimant permanent (19), d'une part, et une face frontale (44, 44A) du boîtier de vanne de commande (7) faisant face à la chambre de travail (3), d'autre part.

9. Servofrein à dépression selon la revendication 8, **caractérisé en ce que** la position axiale de l'aimant permanent (19) par rapport au boîtier de vanne de commande (7) est ajustée par la longueur de l'élément d'écartement (30, 30A).

10. Servofrein à dépression selon la revendication 8 ou 9, **caractérisé en ce que** l'élément d'écartement (30A, 30B) entoure l'aimant permanent (19) ou sa fixation (20, 20A, 20B) de manière concentrique.

11. Servofrein à dépression selon la revendication 10, **caractérisé en ce que** l'élément d'écartement (30B) et l'aimant permanent (19) ou sa fixation (20) sont fixés l'un par rapport à l'autre par un ajustage serré et **en ce que** la position axiale de l'aimant permanent (19) par rapport au boîtier de vanne de commande (7) est ajustée par la longueur du raccordement à ajustage serré.

12. Servofrein à dépression selon l'une des revendications 1 à 11, **caractérisé en ce que** l'aimant permanent (19) ou sa fixation (20, 20A, 20B) sont précontraints par un élément élastique (21) en sens inverse à la direction d'actionnement.

13. Servofrein à dépression selon l'une des revendications 1 à 7, **caractérisé en ce qu'**un prolongement (31), s'étendant en direction de la chambre de travail (3), est relié à l'aimant permanent (19) ou à une fixation (20, 20A, 20B) de l'aimant permanent (19).

14. Servofrein à dépression selon la revendication 13, **caractérisé en ce que** le prolongement (31) comprend une ou plusieurs branches qui s'étendent à travers des ouvertures (48) du boîtier de vanne de commande (7) ou d'un insert (37) de boîtier de vanne de commande relié de manière rigide au boîtier de vanne de commande (7) à l'encontre du sens d'actionnement.

15. Servofrein à dépression selon la revendication 13 ou 14, **caractérisé en ce qu'**une extrémité du prolongement (31) faisant face à la chambre de travail (3) comporte une bride (46) s'étendant radialement vers l'extérieur, et que la bride (46) s'appuie derrière un élément d'écartement (33) qui est couplé de façon rigide au boîtier de vanne de commande (7) à l'encontre du sens d'actionnement.

16. Servofrein à dépression selon la revendication 13 ou 14, **caractérisé en ce qu'**une extrémité du prolongement (31) faisant face à la chambre de travail (3) comporte un filet (36) qui coopère avec un filet complémentaire couplé de façon rigide au boîtier de vanne de commande (7) à l'encontre du sens d'actionnement.

17. Servofrein à dépression selon la revendication 16, **caractérisé en ce que** le filet du prolongement (31) est formé au moins sur une zone du prolongement (31) s'étendant à travers les ouvertures (48) du boîtier de vanne de commande (7) ou de l'insert du boîtier de vanne de commande (37).

18. Servofrein à dépression selon la revendication 16 ou 17, **caractérisé en ce que** le filet du prolongement (31) coopère avec un filet complémentaire d'un anneau de réglage rotatif (35).

19. Servofrein à dépression selon l'une des revendications 15 à 18, **caractérisé en ce qu'**un élément élastique précontraint (34) est disposé entre l'élément d'écartement (33) ou l'anneau de réglage (35) d'une part, et l'aimant permanent (19) ou sa fixation (20, 20A, 20B) d'autre part, cet élément élastique écartant l'un de l'autre l'élément d'écartement (33) ou l'anneau de réglage (35) d'une part et l'aimant permanent (19) ou sa fixation (20, 20A, 20B) d'autre part.

20. Servofrein à dépression selon la revendication 18 ou 19, **caractérisé en ce qu'**un élément de délivrance de force (25) est prévu qui est rotatif par rapport au boîtier de vanne de commande (7) et qui est couplé pour un mouvement rotatif de façon rigide à l'anneau de réglage (35).

21. Servofrein à dépression selon la revendication 20, **caractérisé en ce que** l'élément de délivrance de force (25) et l'anneau de réglage (35) sont pourvus chacun d'au moins une ouverture (25A, 35A) s'étendant en direction axiale, un élément de transmission de force (40) s'étendant à travers des ouvertures (25A, 35A) alignées de l'anneau de réglage (35) et de l'élément de délivrance de force (25).

22. Servofrein à dépression selon la revendication 20 ou 21, **caractérisé en ce que** l'élément de transmission de force (25) est pourvu d'une structure pour introduire un couple dans l'élément de délivrance de force (25).

23. Servofrein à dépression selon l'une des revendications 1 à 7, **caractérisé en ce qu'**une extrémité du boîtier de vanne de commande (7) faisant face à la chambre de travail (3), comprend un insert (37) disposé de manière rotative à l'intérieur du boîtier de vanne de commande (7), cet insert étant couplé à l'encontre du sens d'actionnement et de manière rigide au boîtier de vanne de commande et par un filet à l'aimant permanent (19).

24. Servofrein à dépression selon la revendication 23, **caractérisé en ce que** l'aimant permanent (19) est couplé au boîtier de vanne de commande (7) pour une rotation autour d'un axe longitudinal (A) du boîtier de vanne de commande (7).

25. Servofrein à dépression selon la revendication 23 ou 24, l'insert du boîtier de vanne de commande (37) est pourvu d'une structure (37A) pour l'introduction d'un couple dans l'insert de boîtier de vanne de commande (37).

26. Servofrein à dépression selon l'une des revendications 1 à 25, **caractérisé en ce que** le siège de vanne (10) est couplé à l'élément d'entrée (8) ainsi qu'à l'armature (18, 18A, 18B) au moins en direction d'actionnement de l'élément d'entrée (8).
